**Europäisches Patentamt**

**European Patent Office**

**Office européen des brevets**

Veröffentlichungsnummer: **0 285 698**

**A1**

# EUROPÄISCHE PATENTANMELDUNG

Anmeldenummer: **87114262.6**

Int. Cl.⁴ **B60P 1/64**

Anmeldetag: **30.09.87**

Priorität: **13.03.87 DE 3708066**

Veröffentlichungstag der Anmeldung:
**12.10.88 Patentblatt 88/41**

Benannte Vertragsstaaten:
**AT BE CH DE ES FR GB GR IT LI LU NL SE**

Anmelder: **Paul, Josef**
**An der alten Schmiede 1**
**D-8358 Vilshofen(DE)**

Erfinder: **Paul, Josef**
**An der alten Schmiede 1**
**D-8358 Vilshofen(DE)**

Vertreter: **Matschkur, Peter Dipl.-Phys.**
**Czowalla - Matschkur Patentanwälte Dr.**
**Kurt-Schumacher-Strasse 23**
**D-8500 Nürnberg 11(DE)**

## Nutzfahrzeug mit Wechselaufbau.

Nutzfahrzeug mit einem Fahrzeugrahmen, ggfs. mit aufgesetztem Hilfsrahmen, zur Aufnahme eines wechselbaren langgestreckten Aufbaus (Container) (CC), in dem auf Laufschienen ein mit einer Antriebsvorrichtung versehener längsverschieblicher Schlitten gelagert ist, der eine hydraulische Hubvorrichtung zum Absetzen und Aufnehmen des Aufbaus trägt, sowie mit einer Abstützung am hinteren Ende des Fahrzeugrahmens, mit einem im Fahrzeugrahmen ortsfest gelagerten, parallel zum Fahrzeugrahmen anhebbaren Drehlager (21) mit einer unteren, über einen Niveausgleich parallel zum Fahrzeugrahmen vertikal anhebbaren, Drehlagerplatte (22) und einem drehbaren oberen Drehteller (23) zum Anheben und Verschwenken eines den Aufbau (C) tragenden, lösbar auf dem Fahrzeugrahmen verriegelbaren Container-Tragrahmens (2) mit Container-Eckverschlüssen zwischen der Fahrstellung und einer um 90° verdrehten Aufnahme-bzw. Absetzstellung, in welcher am Drehlager (21) befestigte, in der Fahrstellung quer zur Fahrzeuglängsachse verlaufende, Schienenabschnitte die Lücke der Laufschienen des Fahrzeugrahmens schließen.

FIG. 3

## Nutzfahrzeug mit Wechselaufbau

Die Erfindung bezieht sich auf ein Nutzfahrzeug mit einem Fahrzeugrahmen. ggfs. mit aufgesetztem Hilfsrahmen. zur Aufnahme eines wechselbaren anggestreckten Aufbaus (Container). in dem auf Laufschienen ein mit einer Antriebsvorrichtung versehener längsverschieblicher Schlitten gelagert ist. der eine hydraulische. beispielsweise als Gabelstapler ausgebildete Hubvorrichtung zum Absetzen und Aufnehmen des Aufbaus trägt. sowie mit einer Abstützung am hinteren Endes des Fahrzeugrahmens.

Bei einer Vielzahl von Nutzfahrzeugtypen mit einem Wechselaufbau mit Hilfsrahmen ist vorgesehen. daß der Hilfsrahmen aus einem anhebbar und oder kippbar am Fahrzeugrahmen angeordneten Trägerrahmen und einem auf diesem längsverschiebbaren. eine Gleitrampe bildenden Schieberahmen besteht. Zum Aufnehmen und Absetzen des Aufbaus wird dieser ausfahrbare Hilfsrahmen in Kippstellung gebracht. so daß er sich mit seinem Ende am Boden abstützt. Die Hubvorrichtung braucht dann den Aufbau lediglich am vorderen Ende anzuheben. um ihn dann bei der Längsverfahrung auf der Gleitrampe nach oben zu ziehen. Zum Überschieben auf andere Nutzfahrzeuge oder auf höhere Rampen oder dergl. wird der Hilfsrahmen ohne verkippt zu werden vertikal in seiner Höhe verstellt. Dieses Prinzip des Aufbaus eines Nutzfahrzeugs mit Wechselaufbau. welches bereits in vielfältigen unterschiedlichen Ausführungsformen vorgeschlagen worden ist. hat sich auch sehr bewährt. insbesondere für die Handhabung von Großcontainern. von denen ein einzelner den gesamten Aufbau eines Lkw's darstellt. Schwierigkeiten können sich dabei allerdings dadurch ergeben. daß ein relativ genaues Rangieren des Nutzfahrzeugs bezüglich der anderen Fahrzeuge bzw. der Rampe erforderlich ist und daß darüber hinaus das Aufheben und Absetzen auf sehr hochliegenden Rampen bzw. Gegenfahrzeugen wegen der beschränkten Hubhöhe mit Schwierigkeiten verbunden ist. Vor allem aber läßt sich dabei ein Container nicht auf ein querstehendes Fahrzeug. insbes. einen Eisenbahnwaggon. und umgekehrt. übersetzen. Um ein einfaches Aufheben und Absetzen eines Containers auf der Ladefläche eines Nutzfahrzeugs zu erreichen. sind - man vergl. hierzu beispielsweise die Deutsche Gebrauchsmusterschrift 1 893 821 sowie die Deutsche Offenlegungsschrift 27 53 962 -auch bereits Nutzfahrzeugaufbauten der eingangs beschriebenen Art vorgeschlagen worden. bei denen auf dem am Fahrzeugrahmen verfahrbaren Schlitten ein Gabelstapler als Hubvorrichtung angeordnet ist. der den Container untergreift und auf der Ladefläche des Fahrzeugs absetzt.

Beide vorbekannte Nutzfahrzeugsysteme mit Wechselaufbau ermöglichen allerdings nur die Aufnahme von relativ kurzen Containern. da Großcontainer. beispielsweise 20'-Container. bei der Aufnahme mit Hilfe eines solchen Gabelstaplers - unabhängig von der Länge der Gabelstaplerarme - eine derartige Hecklastigkeit zur Folge haben. daß das gesamte Fahrzeug beim Aufnehmen oder Absetzen des vollständig nach hinter über den Fahrzeugrahmen überstehenden Containers unweigerlich umkippen müßte.

Der Erfindung liegt daher die Aufgabe zugrunde. ein Nutzfahrzeug mit Wechselaufbau der eingangs genannten Art so auszugestalten. daß es neben kleinen Containern auch Großcontainer problemlos aufnehmen und absetzen kann.

Zur Lösung dieser Aufgabe ist ein derartiges Nutzfahrzeug erfindungsgemäß gekennzeichnet durch ein im Fahrzeugrahmen - bzw. im Hilfsrahmen. falls ein solcher vorgesehen ist - ortsfest gelagertes. parallel zum Fahrzeugrahmen anhebbares Drehlager mit einer unteren. über einen Niveauausgleich parallel zum Fahrzeugrahmen vertikal anhebbaren. Drehlagerplatte und einem drehbaren oberen Drehteller zum Anheben und Verschwenken eines den Aufbau tragenden. lösbar auf dem Fahrzeugrahmen verriegelten Container-Tragrahmens mit Container-Eckverschlüssen zwischen der Fahrstellung und einer um 90° verdrehten Aufnahme bzw. Absetzstellung. in welcher am Drehlager befestigte. in der Fahrstellung quer zur Fahrzeuglängsachse verlaufende Schienenabschnitte die Lücke der Laufschienen des Fahrzeugrahmens schließen.

Durch die erfindungsgemäße Ausbildung wird erreicht. daß der Container grundsätzlich quer zu seiner Längsrichtung vom Gabelstapler auf-und abgesetzt werden kann. wodurch ein starker hecklastiger Überstand und damit die Gefahr eines Verkippens des Fahrzeugs mit dem hochgehobenen Container vermieden ist. Nach dem Aufnehmen des Containers wird er von der Hubvorrichtung in angehobener Stellung soweit verfahren. bis er über dem Drehlager angeordnet ist. Nach dem Absenken auf das Drehlager wird der Schlitten mit der Hubvorrichtung in Richtung auf das vordere Ende des Fahrzeugaufbaus verfahren und anschließend der Container mit seiner Längsachse in die Längsachse des Fahrzeugs gedreht und schließlich auf dem Fahrzeugrahmen abgesetzt und dort verriegelt.

Dieser erfindungsgemäße Aufbau mit einem Drehlager geht dabei auch weiter als die in der älteren Gebrauchsmusteranmeldung G 86 17 008.2 vorgesehene Ausbildung eines Nutzfahrzeugs mit Gabelstapler und Drehteller, da dort der Drehteller dazu dient, den Schlitten mit der Hubvorrichtung und dem Container insgesamt zu drehen, so daß z.B. mehrere kleinere Container hintereinbander auf der Ladefläche eines Fahrzeugs abgesetzt werden können. Die dort vorgesehene Lösung eignet sich, wie auch alle anderen Gabelstaplerlösungen, nicht für die Handhabung von Großcontainern. Diese fehlende Eignung für die Handhabung von Großcontainern gilt dabei auch für ein im Gebrauchsmuster G 86 17 393.6 beschriebenes Transportfahrzeug mit Selbstladeeinrichtung, wobei das dabei vorgesehene, mit den Container-Eckbeschlägen zusammenwirkende Hubgeschirr verfahrbar auf dem Fahrzeugrahmen angeordnet ist und darüber hinaus zur Aufnahme von querstehenden Containern und ihre mögliche Umsetzung in die Längsrichtung eine Drehscheibe angeordnet ist. Diese Lösung ist jedoch - abgesehen von dem fehlenden Niveauausgleich, der auch bei außermittiger Beladung des Containers ein paralleles Anheben zum Fahrzeugrahmen gewährleistet -- schon deshalb für die meisten Anwendungsfälle, insbesondere aber für die Handhabung von Großcontainern, ungeeignet, da ein unmittelbar am Boden des Containers angreifender Drehteller wegen der fehlenden Stabilität solcher Container außerhalb der äußeren Rahmenbereiche, in denen auch die Container-Eckbeschläge angeordnet sind, nicht gegeben ist. Ganz entscheidend für das Funktionieren eines erfindungsgemäßen Transportfahrzeugs ist daher u.a. auch der spezielle, gegenüber dem Fahrzeugrahmen anhebbare und - schwenkbare Container-Tragrahmen, der beim Aufnehmen des Containers auf dem Fahrzeug verbleibt.

Um die schweren Lasten von Großcontainern problemlos in die Laufschienen zu bringen, ohne daß hierzu ein Containerschlitten nach Art der bereits genannten DE-OS 27 53 962 erforderlich ist, der nahezu die Hälfte der gesamten Aufbaulänge ausmacht, um die Kräfte vernünftig verteilen zu können, ist in Ausgestaltung der Erfindung vorgesehen, daß der Schlitten auf der der Hubvorrichtung abgelegenen Vorderseite mit einer ausfahrbaren, schwenkbar angelenkten Lastaufnahmestrebe versehen ist, deren unteres Ende verfahrbar an den Schlittenlaufschienen gehalten ist.

Durch Betätigung eines hydraulischen Streben-Schwenkzylinders zum Ausfahren der Lastaufnahmestrebe in eine Schwenkstellung wird der Abstand zwischen den hinteren Laufrädern des Schlittens der Hubvorrichtung und den Laufrädern am unteren Ende der Lastaufnahmestrebe im Bedarfsfall entsprechend vergrößert, um die hohen Kräfte des von der Gabelstaplerhubvorrichtung angehobenen Containers problemlos in den Fahrzeugrahmen einleiten zu können. In der Normalstellung ist aber der gesamte Schlitten relativ kurz und beeinträchtigt daher die nutzbare Aufnahmelänge des Fahrzeugrahmens nicht wesentlich, jedenfalls nicht in dem Maß, wie es zur Krafteinleitung während des Auf-und Absetzens erforderlich ist.

Mit besonderem Vorteil kann der Schlitten mit einem, darüber hinaus vorzugsweise im Fußlagerteil der Lastaufnahmestrebe integriertem, Hydraulikmotor mit insbesondere paarweise angeordneten, sich an einer stehenden Zahnstange des Hilfsrahmens abwälzenden, Zahnrädern versehen sein, wobei ggfs. am Drehlager wiederum ein Zwischenstück für die Zahnstange angeordnet ist, welches eine Aussparung der Zahnstange ergänzen kann, die je nach den baulichen Gegebenheiten zur Anordnung des Drehlagers vorgesehen werden muß.

Der Aufbau und die Anordnung des Drehlagers unterscheidet sich dabei im wesentlichen je nachdem, ob der erfindungsgemäße Aufbau auf einem Lkw, insbesondere einem 4-achsigen Lkw, angeordnet werden soll oder auf einem Sattelauflieger. Bei Anordnung auf einem Lkw kann nämlich das Drehlager nicht unmittelbar unter dem Schwerpunkt des Aufbaus angeordnet sein, sondern muß weiter nach rückwärts, bevorzugt zwischen den hinteren Fahrzeugachsen, angeordnet werden, so daß in der Fahrstellung des Nutzfahrzeugs der Schwerpunkt des Containers nicht mit dem Drehpunkt des Drehlagers übereinstimmt. Zu diesem Zweck ist in Ausgestaltung der Erfindung vorgesehen, daß der Container-Tragrahmen mittels Verschubzylindern nach hinten in eine Stellung verschiebbar ist, in welcher der Schwerpunkt des Aufbaus im wesentlichen mit dem Drehpunkt des Drehlagers zusammenfällt, damit - nach einem Anheben des Drehtellers -der Container auf dem Container-Traggestell um 90° verdreht werden kann, so daß er - nach dem Wiederabsenken - von der Gabelstapler-Hubvorrichtung aufgenommen, hochgehoben und durch Verfahren des die Hubvorrichtung tragenden Schlittens an das hintere Ende des Fahrzeugrahmens entweder auf ein anderes Fahrzeug aufgesetzt oder ggfs. auch auf den Boden abgesetzt werden kann.

Dieser Lkw-Aufbau mit mittels Verschubzylindern erfolgender Verschiebung des Container-Tragrahmens mit dem daraufsitzenden Container in eine Stellung, in der sein Schwerpunkt mit dem Drehpunkt des Drehlagers fluchtet, kann in Weiterbildung der Erfindung besonders einfach dadurch erzielt werden, daß auf dem oberen Drehteller Führungsrohre, vorzugsweise Vierkantrohre, befestigt sind, in denen Längsverschubträger des Container-Tragrahmens gleitend verschiebbar gelagert sind, wobei die Verschubzylinder außen an den Führungsrohren befestigt sein können und mit den Enden ihrer Kolben an den hinteren Enden der Längsverschubträger angreifen.

Dabei hat es sich weiterhin als vorteilhaft erwiesen, am Fahrzeugrahmen befestigte Auflagerollen für den Container-Tragrahmen vorzusehen, damit die Längsverschiebung möglichst gleichgängig und ohne allzu große Reibungskräfte erfolgen kann.

Die bevorzugte Ausführungsform eines erfindungsgemäßen Fahrzeugaufbaus wäre selbstverständlich die, bei welcher das Drehlager direkt unter dem Schwerpunkt des in Fahrstellung befindlichen Aufbaus angeordnet ist.

Im Gegensatz zu Lkw-Aufbauten läßt sich dieser Aufbau bei Sattelaufliegern ohne weiteres erreichen, so daß dort das Vorsehen von Verschubzylindern für den Container-Tragrahmen entfallen kann.

Bei derartigen Sattelaufliegern hat es sich - obgleich auch dort das Anheben der unteren Drehlagerplatte durch vier in den Ecken angeordnete gleichlaufgesteuerte Hydraulikzylinder erfolgen könnte - als besonders zweckmäßig erwiesen, die untere Drehlagerplatte von einem zentralen Hub-Schwenk-Zylinder anheben zu lassen, wobei dann besondere Niveauausgleichssteuerungen vorgesehen sein müssen, um das Verkippen der Platte auch bei außermittig beladenem Container sicher zu verhindern. Ein solcher Niveauausgleich kann beispielsweise dadurch erzielt werden, daß die untere Drehlagerplatte mittels am Sattelaufliegerrahmen angelenkten Parallelogramm-Führungsgestängen horizontal zwangsgeführt ist.

Darüber hinaus kann in Weiterbildung der Erfindung auch vorgesehen sein, daß die untere Drehlagerplatte über eine Zentralverriegelung lösbar mit dem oberen Drehkranz verbindbar ist und durch Zahnstangenführungen zwangsweise parallel zum Fahrzeugrahmen geführt ist, vorzugsweise dergestalt, daß auf der Unterseite der unteren Drehlagerplatte, vorzugsweise längs aller vier Seitenkanten, drehbar gelagerte Wellen befestigt sind, die an den Enden mit in ortsfest im Fahrzeugrahmen angeordnete Zahnstangen eingreifenden Ritzeln versehen sind. Durch diese 8 vertikalgestellten Zahnstangen in den Ecken der unteren Drehlagerplatte in Verbindung mit den 4 Wellen und ihren 8 Ritzeln wirkt die Vorrichtung beim Anheben, bei dem die untere Drehlagerplatte infolge der Verriegelung mit dem oberen Drehkranz ja mit angehoben wird, wie ein Stabilisator, der auch bei Auftreten sehr starker außermittiger Lasten jegliche Verkippung des angehobenen Container-Tragrahmens mit dem Container sicher verhindert. Zum Verbringen des Containers in eine Kippstellung, die weiter unten noch näher beschrieben wird, braucht lediglich die Zentralverriegelung gelöst zu werden.

Vorzugsweise sollen in allen 4 Ecken des Drehlagers angeordnete Anschläge in der oberen Endverschiebestellung des Drehlagers vorgesehen sein, so daß in dieser oberen Endverschiebestellung durch außermittige Beladung des Containers hervorgerufene Kippkräfte nicht mehr von den Stabilisierungen (z.B. Parallelogrammgestänge oder Zahnstangenführungen) abgefangen zu werden brauchen.

In entsprechender Weise soll auch eine, wiederum vorzugsweise hydraulisch betätigbare, Verriegelung des Drehlagers in der unteren Endstellung, beispielsweise durch in eine Quertraverse des Container-Tragrahmens einschwenkbare Riegel, vorgesehen sein, damit beim Absetzen oder Überschieben des Containers durch die in die hintere Endstellung auf dem Fahrzeugrahmen verfahrene Hubvorrichtung, die möglicherweise im Bereich der Zwischenstücke des Drehtellers mit ihrer Lastaufnahmestrebe ziehende Hubvorrichtung nicht den Container-Tragrahmen vom Fahrzeugaufbau abheben kann, da ja in dieser Stellung erhebliche Kippkräfte auftreten.

Gerade bei Sattelaufliegern, in Ausnahmefällen aber auch bei Lkw's, ist es dabei zweckmäßig, wenn der Fahrzeugrahmen vor und hinter dem Drehlager durch hydraulisch ausfahrbare Abstützungen am Boden abstützbar ist, da ansonsten ja trotz der zwangsweisen Parallelführung des anhebbaren Drehlagers zum Fahrzeugrahmen Verkippungen aufgrund von Bodenneigungen sowie des Einfederns der vorderen Fahrzeugachse nicht auszuschließen wären.

Neben einer Bewirkung der Schwenkbewegung der oberen Drehplatte über zwei einander gegenüberliegende, sich an der unteren Drehlagerplatte einerseits und an der Schwenkplatte andererseits abstützende Schwenkhydraulikzylinder, was besonders bei Lkw-Lösungen in Frage kommt, kann auch vorgesehen sein, daß der als Drehkranz ausgebildete oder mit einem derartigen Drehkranz versehene obere Drehteller durch einen Servomotor angetrieben wird. Ein solcher Servomotor greift dann mit seinem Abtriebsritzel vorzugsweise in eine Außenverzahnung des Drehkranzes ein, wobei bei einer Außenverzahnung des Drehkranzes auch ein Drehantrieb über eine Zahnstange erfolgen könnte.

Die vordere Stirnstrebe des Containerrahmens ist jeweils mit einem die Führungsschienen des Schlittens übergreifenden Ausschnitt versehen, d.h. die - zur Einfädelung des Containers im oberen Bereich nach außen gestellte - Stirnplatte ist oberhalb der Längsverschubträger quer durchgehend ausgebildet, erstreckt sich jedoch nur im Bereich der äußeren Ecken mit den Container-Eckverschlüssen über die Oberseite der Längsverschubträger nach unten.

Schließlich liegt es auch noch im Rahmen der Erfindung, den Container zusammen mit dem Container-Tragrahmen kippbar am Aufbau anzulenken.

Das Verkippen des Containers auf seinem Container-Tragrahmen kann dabei in einfacher Weise mit Hilfe der sowieso zum Anheben und damit Drehen des Containers notwendigen Hub-Schwenkzylinder erfolgen, wobei in beiden Ausführungsvarianten, d.h. bei der Lkw-Lösung als auch bei der Sattelauflieger-Lösung, selbstverständlich vor dem Kippen zunächst eine Schwenkverbindung zwischen dem Container-Tragrahmen und dem Nutzfahrzeugrahmen, beispielsweise durch Einstecken von Bolzen oder das Ausfahren von hydraulischen Schwenkzapfen erfolgen muß.

Bei der Lkw-Lösung können die beiden vorderen Hub-Schwenkzylinder durch entsprechend weites Ausfahren, während die hinteren Zylinder ausgeschaltet sind, die Kippbewegung des Containerrahmens mit dem aufgesetzten Container bewirken.

Bei der Sattelauflieger-Lösung eines erfindungsgemäßen Nutzfahrzeugs kann der zentrale Hub-Schwenkzylinder das Anheben bewirken, wobei in diesem Fall die untere Drehlagerplatte an Ort und Stelle verbleibt und nicht, wie bei der Lkw-Lösung, mitverschwenkt wird. Dabei ist es vorteilhaft, wenn der mit dem Container-Tragrahmen verbundene Kopf des zentralen Hub-Schwenk-Zylinders ein Druck-Schwenklager enthält.

Schließlich liegt es auch noch im Rahmen der Erfindung, eine an der hydraulischen Hubvorrichtung befestigte, mit einem Monitor in der Fahrerkabine verbundene Fernsehkamera vorzusehen, so daß der Fahrer von der Kabine aus das Aufnehmen, Absetzen und Überschieben des Containers vornehmen und überwachen kann, und keine zusätzliche zweite Außensteuerung vorgesehen sein muß, die darüber hinaus ja auch noch in einem Bereich läge, in dem möglicherweise eine Gefährdung durch die bewegten schweren Lasten gegeben ist.

Neben der bereits eingangs angedeuteten Möglichkeit der Verwendung einer als Gabelstapler ausgebildeten Hubvorrichtung kann in Weiterbildung der Erfindung auch vorgesehen sein, daß die Hubvorrichtung ein Hubgerüst mit einem in die oberen Containereck-Verschlüsse eingreifenden Ladegeschirr mit einem im wesentlichen U-förmigen Träger umfaßt, dessen Querarm und dessen Längsarme in eine Fahrstellung zusammenfaltbar sind.

Eine derartige Hubvorrichtung mit einem Ladegeschirr ermöglicht die Handhabung auch schwerster Container, was mit einem Gabelstapler als Hubvorrichtung nicht realisierbar wäre. Hinzu kommt, daß viele Container überhaupt keine Gabelstaplertaschen aufweisen, so daß sie mit Hilfe eines Gabelstaplers überhaupt nicht angehoben werden könnten. Container-Eckverschlüsse sowohl an den unteren vier Ecken als auch den oberen vier Ecken sind jedoch bei den heutzutage verwendeten Container serienmäßig genormt vorhanden, so daß mit Hilfe einer ein solches Ladegeschirr umfassenden Hubvorrichtung praktisch alle gängigen Container und Großbehälter handhabbar sind.

Die Besonderheit liegt dabei nicht entscheidend in der Verwendung eines Ladegeschirrs, welches ja zur Handhabung von Containern bereits bekannt ist, sondern in der Verwendung eines zusammenfaltbaren Ladegeschirrs. Würde das Ladegeschirr nicht zusammenfaltbar sein, so müßte es beim Transport oberhalb des Containers liegenbleiben und damit die Gesamthöhe des Aufbaus entsprechend höher werden. Dies bedeutet aber in vielen Fällen, daß die höchstzulässige Ladehöhe überschritten würde. Dies vermeidet nun die Erfindung dadurch, daß das Ladegeschirr zusammenfaltbar ist, und zwar vorzugsweise in der Art, daß der Querarm aus drei Teilen mit Zwischengelenken und endseitigen Gelenken zum Anlenken der Längsarme mit jeweils vertikalen Schwenkachsen besteht, wobei die Gelenke so ausgebildet sind, daß die nach innen gegen die entsprechenden Außenabschnitte des Querarms gefalteten Längsarme gemeinsam mit diesen nach vorne in Fahrtrichtung schwenkbar sind. Auf diese Weise wird dann das so wiederum U-förmig, aber in wesentlich kleinerer Breite und Längserstreckung zusammengefaltete Ladegeschirr nach vorne ragend hinter oder über dem Führerhaus angeordnet, da das Dach ja grundsätzlich tieferliegt als die obere Deckfläche eines aufgesattelten Containers, so daß in diesem Höhenspielraum nun das zusammengefaltete Ladegeschirr unterbringbar ist.

Obgleich es selbstverständlich auch möglich wäre, die Längsarme nochmals mit einem Gelenk zu versehen, um sie ihrerseits nochmals zusammenfaltbar zu halten, hat es sich in Ausgestaltung der Erfindung als zweckmäßig erwiesen, die Längsarme als vorzugsweise hydraulisch betätigbare Teleskoparme auszubilden.

Eine derartige erfindungsgemäße Hubvorrichtung mit zusammenfaltbarem Ladegeschirr eignet sich dabei er sichtlich nicht nur für die weiter oben im einzelnen beschriebenen Nutzfahrzeuge mit einem Drehteller, sondern ist grundsätzlich auch für andere fahrbare Hubvorrichtungen zweckmäßig einsetzbar, bei denen es darauf ankommt, das Ladegeschirr bei Nichtbenutzung in einer weniger ausladenden Stellung unterbringen oder verfahren zu können.

Um die Handhabung einer erfindungsgemäßen Hubvorrichtung mit einem Ladegeschirr zu vereinfachen, kann in weiterer Ausgestaltung der Erfindung vorgesehen sein, daß die Längsarme mit oberseitigen Innenkeilführungen für die unterseitig abgeschrägten Ausschubteile derart versehen sind, daß deren freie, einen Bolzen zum Eingreifen in einen Container-Eckbeschlag tragende, Enden kurz vor dem vollständigen Ausschieben aus einer angehobenen Stellung in eine Absenkstellung gelangen, in denen die Bolzen mit den zugehörigen Container-Eckbeschlägen fluchten.

Durch diese Ausbildung ist es nämlich möglich, zunächst die am Querträger angeordneten Bolzen in die beiden unmittelbar benachbarten oberen Container-Eckbeschläge des Containers einzufädeln, was dann besonders einfach ist, wenn zur Bedienung ein am Schlitten befestigter, vorzugsweise anhebbarer Sitz mit einer daran angeordneten Steuervorrichtung zur Betätigung der Hubvorrichtung vorgesehen ist (bessere Übersicht). Nachdem somit diese Bolzen in die Container-Eckbeschläge eingefädelt worden sind, was problemlos möglich ist, da ja die Längsarme über der Deckfläche des Containers liegen und überhaupt nicht stören können, werden die Längsarme mit Hilfe einer entsprechenden Hydraulik ausgefahren, wobei durch die Schräganhebung der vorderen Enden diese immer noch über dem Dach des Containers liegen. Erst unmittelbar vor dem Ende der Ausfahrbewegung gibt die Innenkeilführung die Ausschubteile frei, die dann in eine horizontale Lage übergehen, wobei das vordere Ende mit dem Bolzen für den Container-Eckbeschlag sich soweit absenkt, daß der Bolzen genau vor dem abgelegenen Container-Eckbeschlag liegt. Es bedarf also lediglich noch einer kleinen Rückzugbewegung, um die Bolzen in die für die Bedienungsperson überhaupt nicht sichtbaren äußeren Container-Eckbeschläge einzuhaken.

Neben der Möglichkeit, alle notwendigen Justierbewegungen zur Ausrichtung des Ladegeschirrs gegenüber dem Container, was bei unebenen Böden ja eine Reihe von Verstellfreiheitsgraden bedeutet, ausschließlich dadurch zu erzeugen, daß im Ladegeschirr selbst die entsprechenden Bewegungsmöglichkeiten vorgesehen sind, hat es sich auch als zweckmäßig erwiesen, das Hubgerüst mit einem Längsschlitten zur Anhebung des Ladegeschirrs um eine horizontale Achse gegenüber der Senkrechten neigbar auszugestalten, was besonders einfach dadurch möglich ist, daß das Hubgerüst zwischen seinen Enden an einem Lagerbock des Schlittens gelagert und am unteren Ende mit einem vorzugsweise horizontalliegenden Hydraulikzylinder verbunden ist. In Verbindung mit einer zusätzlichen Schwenkbarkeit des Hubgerüsts um seine Längsachse lassen sich dann in sehr einfacher Weise Verkippungen aufgrund der Bodenunebenheiten, bzw. Fehlausrichtungen, vermeiden, die entweder daraus resultieren, daß der Fahrer den Container nicht senkrecht genau mittig anfahren kann oder aber eben aufgrund von Fahrfehlern nicht genau in dieser Idealposition angefahren hat.

Schließlich liegt es auch noch im Rahmen der Erfindung, eine begrenzte seitliche Verschiebbarkeit des Ladegeschirrs gegenüber dem Hubgerüst vorzusehen, die einen einfachen Ausgleich gestattet, wenn der Fahrer sein Fahrzeug nicht genau mittig vor den Container gefahren hat oder fahren konnte.

Weitere Vorteile, Merkmale und Einzelheiten der Erfindung ergeben sich aus der nachfolgenden Beschreibung dreier Ausführungsbeispiele sowie anhand der Zeichnung. Dabei zeigen:

Fig. 1 eine Seitenansicht eines erfindungsgemäßen Nutzfahrzeugs in Form eines 4-achsigen Lkw in Fahrstellung des Containers.

Fig. 2 eine am vorderen Ende abgebrochene Seitenansicht des Lkw gemäß Fig. 1 mit nach rückwärts in seine Drehstellung über dem Drehlager verschobenem Container.

Fig. 3 eine vergrößerte Seitenansicht des rückwärtigen Endes des Lkw mit dem bereits angehobenen und um 90° gedrehten Container.

Fig. 4 das Übersetzen bzw. Aufnehmen des Containers vom Lkw auf, bzw. von, einen Eisenbahnwaggon,

Fig. 5 eine teilweise Ansicht des hinteren Teils eines erfindungsgemäßen Lkw nach den Figuren 1 bis 4 in der Kippstellung des Containers,

Fig. 6 eine Seitenansicht eines erfindungsgemäß aufgebauten Sattelaufliegers in der um 90° gegen die Fahrzeuglängsachse gedrehten Stellung des Containers,

Fig. 7 eine Draufsicht auf den Sattelauflieger in der Container-Tragrahmenstellung nach Fig. 6 bei abgenommenem Container,

Fig. 8 eine der Fig. 7 entsprechende Draufsicht bei in Fahrtrichtung gedrehtem Container-Tragrahmen,

Fig. 9 eine Rückansicht des Heckaufliegers mit aufgesetztem Container,

Fig. 10 eine Teilseitenansicht des Sattelaufliegers nach den Figuren 6 bis 9 in der Kippstellung des Containers,

Fig. 11 eine etwas vergrößerte Teilseitenansicht eines abgewandelten Sattelaufliegers mit einer anders gearteten Stabilisierung der Horizontalführung des Drehlagers und damit auch des Container-Tragrahmens beim Anheben und Schwenken in die Querstellung zur Fahrzeuglängsrichtung, in der abgesenkten Fahrstellung,

Fig. 12 eine der Fig. 11 entsprechende Seitenansicht des Drehlagers in der angehobenen Stellung vor dem Verschwenken des Containers.

Fig. 13 eine der Fig. 12 entsprechende Seitenansicht, in welcher der Container bereits um 90° zur Fahrzeuglängsrichtung verschwenkt ist und wieder abgesetzt ist.

Fig. 14 eine Seitenansicht der Anordnung nach den Figuren 11 bis 13 in der Kippstellung des Containers.

Fig. 15 eine Draufsicht auf die untere Drehlagerplatte der Anordnung nach den Figuren 11 bis 14 mit der darauf angeordneten Zentralverriegelung zur Verbindung mit dem oberen Drehkranz.

Fig. 16 eine Seitenansicht des hinteren Teils eines Nutzfahrzeugs mit einer ein zusammenfaltbares Ladegeschirr umfassenden Hubvorrichtung mit aufgenommenem Container.

Fig. 17 eine Aufsicht auf die Anordnung nach Fig. 16.

Fig. 18 eine vergrößerte Rückansicht des Ladegeschirrs.

Fig. 19 eine Seitenansicht des Ladegeschirrs in teilweise in die Container-Eckbeschläge eines Containers eingefädelter Stellung vor dem Ausfahren der als Teleskoparme ausgebildeten Längsarme, und

Fig. 20 eine dem Maßstab nach Fig. 18 entsprechende, gegenüber den Figuren 16, 17 und 19 vergrößerte Aufsicht auf das Ladegeschirr und den darunterliegenden Schlitten in der zusammengefalteten Fahrstellung.

Fig. 21 eine teilweise geschnittene Seitenansicht einer abgewandelten Vorrichtung mit pendelnd aufgehängtem Ladegeschirr.

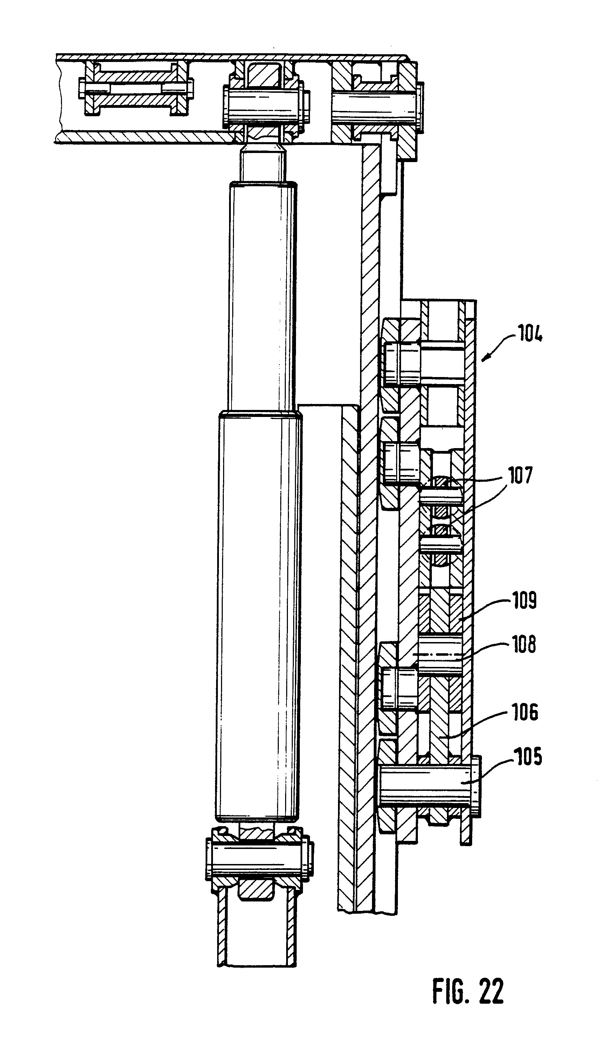

Fig. 22 einen abgewinkelten Schnitt längs der Linie XXII-XXII in Fig. 21,

Fig. 23 eine teilweise vertikalgeschnittene Rückansicht des inneren Abschnitts des Querarms des Ladegeschirrs nach den Figuren 21 und 22, und

Fig. 24 einen abgewinkelten Schnitt längs der Linie XXIV-XXIV in Fig. 23.

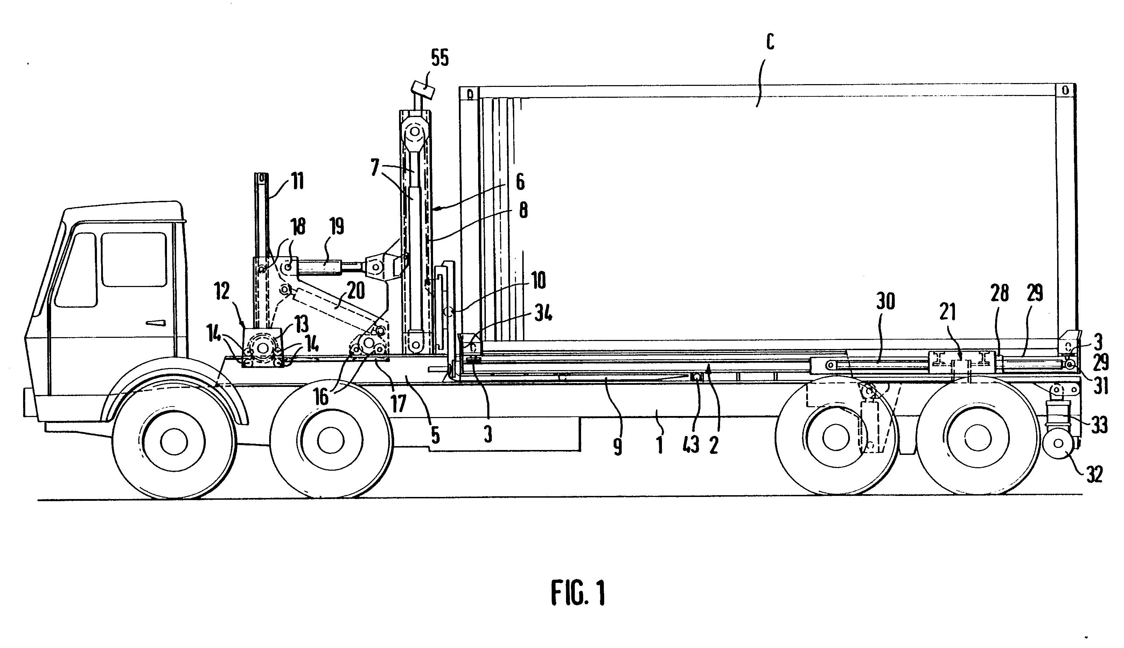

Bei dem in den Figuren 1 bis 5 dargestellten Ausführungsbeispiel eines erfindungsgemäßen Nutzfahrzeugs handelt es sich um einen 4-achsigen Lkw mit einem aufgesetzten großen 20'-Container C. Dieser Container C ist auf dem Fahrzeughauptrahmen 1 mit Hilfe eines Container-Tragrahmens 2 mit üblichen Container-Eckverschlüssen 3 gehalten. Dabei ist mit 4 der zwei Laufschienen 5 umfassende Grundrahmen des Ladeliftsystems bezeichnet, auf welchem das Stapler-Hubgerüst 6 mit dem Gerüsthubzylinder 7 und dem Staplerkippzylinder 19 verfahrbar ist. Mit 9 sind die Stapler-Gabeln bezeichnet, die seitlich mit Hilfe eines nur angedeuteten Seitenverschubzylinders 10 verschiebbar sind.

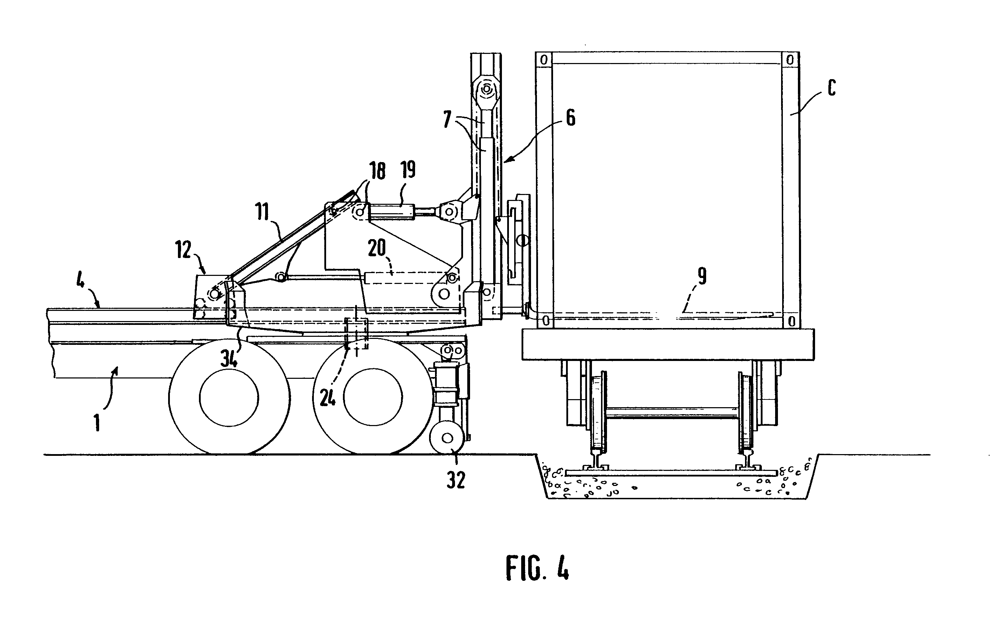

Das Stapler-Hubgerüst ist auf dem den Stapler-Gabeln 9 abgelegenen vorderen Ende mit einer ausfahrbaren, schwenkbar angelenkten Lastaufnahmestrebe 11 versehen, deren Fußteil 12 den Schlittenantrieb 13 umfaßt. Dieser Schlittenantrieb 13 enthält dabei in an sich bekannter Weise einen Hydraulikmotor mit vorzugsweise paarweise angeordneten, sich an einer stehenden, in den Figuren 1 bis 5 nicht dargestellten, Zahnstange abwälzenden Zahnrädern. Diese Zahnstange liegt mittig zwischen den Führungsschienen 5 des Grundrahmens 4 des Ladeliftsystems. Mit 14 sind vordere Laufrollen bezeichnet, die die Lauffläche 15 der Führungsschienen 5 über-bzw. untergreifen. Entsprechende Laufrollen 16 am hinteren Ende, d.h. unmittelbar unter dem Hubgerüst, sorgen in Verbindung mit die Lauffläche 15 unter greifenden Gleitkufen 17 für eine sichere verkippungsfreie Verfahrbarkeit des Ladeliftsystems auf dem Grundrahmen 4. Die schwenkbare Verbindung der Lastaufnahmestrebe 11 am Anlenkpunkt 18 ermöglicht in Verbindung mit dem hydraulischen Streben-Schwenkzylinder 20 eine Verschwenkung der Lastaufnahmestrebe 11 in die in Fig. 4 gezeigte Aufnahme-, Absetz-und Überschieb-Stellung, bei welcher das hohe Gewicht des vom Gabelstapler-Hubsystem 6 aufgenommenen Containers C durch weites Auseinanderschieben der vorderen Führungsrollen gegenüber den hinteren Führungsrollen 16 mit dazugehöriger Gleitkufe 17 durch eine wesentlich günstigere Krafteinleitung in den Fahrzeugrahmen abgefangen wird, als es bei der verkürzten vertikalen Stellung in Fig. 1 der Fall wäre. Diese günstige Krafteinleitung ergibt sich dabei ohne die zwangsweise Ausbildung des Ladeliftsystems mit einer entsprechend großen Länge, wodurch ja nur nutzbarer Raum auf dem Fahrzeugaufbau verlorenginge. Mit Hilfe des hydraulischen Verbindungszylinders 19 kann eine Neigung des Stapler-Hubgerüsts und damit ein Anheben der vorderen Enden der Stapler-Gabeln erreicht werden.

Am hinteren Ende des Fahrzeugaufbaus, im Anschluß an den Grundrahmen 4 des Ladeliftsystems, ist ein Drehlager 21 vorgesehen, welches eine horizontal, d.h. parallel zum Fahrzeugrahmen anhebbare untere Drehlagerplatte 22 und einen oberen Drehteller 23, der mit Hilfe eines Drehlagers 24 mit Schwenkzylindern 25 gegenüber der unteren Drehlagerplatte 22 um 90° verschwenkbar ist, umfaßt. Das Anheben der unteren Drehlagerplatte erfolgt mit Hilfe zweier vorderer Hub-Kipp-Zylinder 26 sowie zweier hinterer Hub-Kipp-Zylinder 27, die mit einer hydraulischen Gleichlaufsteuerung versehen sind, so daß beim Anheben in jedem Fall die horizontale bzw. parallel zum Fahrzeugrahmen verlaufende Stellung der unteren Drehlagerplatte beibehalten wird.

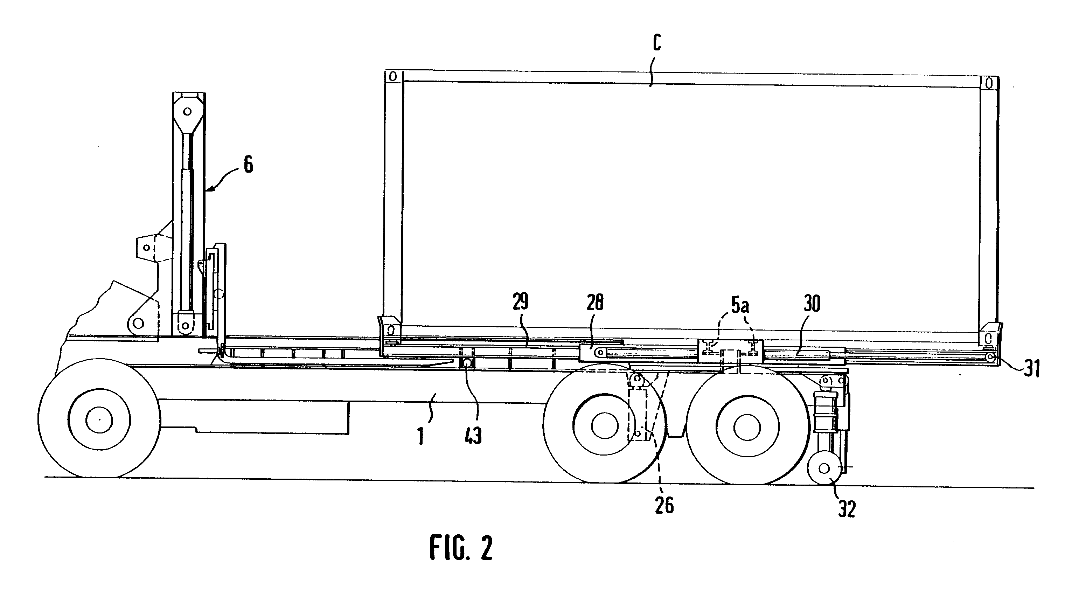

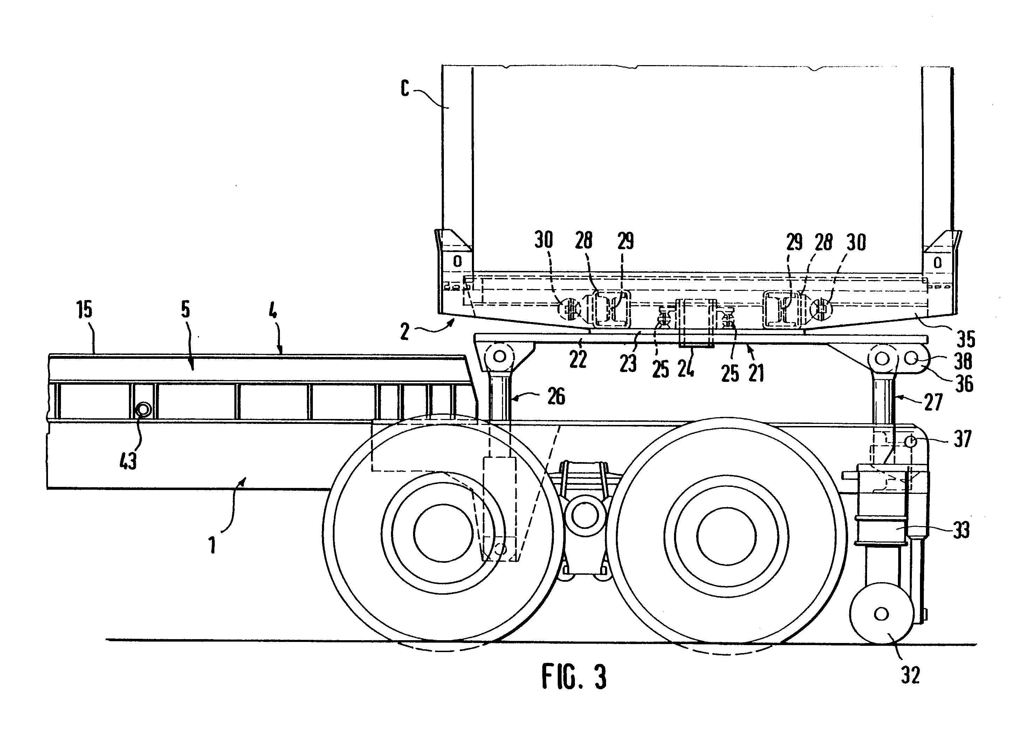

Bei dem in den Figuren 1 bis 5 dargestellten 4-achsigen Lkw fällt in der Fahrstellung der Schwerpunkt C nicht mit der Drehachse des Drehlagers 21 zusammen, so daß vor dem Drehen des Containers in die in Fig. 3 gezeigte Stellung, in der dann der Gabelstapler den Container quer zu seiner Längsrichtung untergreifen und entweder, wie in Fig. 4 auf einen Eisenbahnwagen oder auch auf ein anderes Fahrzeug oder auch auf den Boden absetzen kann, eine Längsverschiebung des Containers C erforderlich ist. Zu diesem Zweck sind auf dem oberen Drehteller 23 als Rechteckrohre ausgebildete Führungsrohre 28 befestigt, in welchen als I-Träger ausgebildete Längsverschubträger 29 des Container-Tragrahmens 2 gleitend verschiebbar gelagert sind. Die Verschiebung erfolgt dabei mit Hilfe von auf der Außenseite der Führungsrohre 28 befestigten Verschubzylindern 30, deren Kolbenenden 31 am hinteren Ende der Längsverschubträger 29 angelenkt sind. Durch Betätigung der Verschubzylinder 30 wird der Container C aus der in Fig. 1 gezeigten Fahrstellung in die nach hinten verschobene Stellung gemäß Fig. 2 geschoben, in der der Schwerpunkt des Containers C über der Drehachse des Drehlagers 24 angeordnet ist. nach dem anheben der unteren Drehlagerplatte und damit auch des Container-Tragrahmens 2 und des Containers C in eine angehobene Stellung, in welcher der Container-Tragrahmen über dem Grundrahmen des Ladeliftsystems liegt, kann mit Hilfe der Schwenkzylinder 25 die obere Drehplatte mit dem daraufsitzenden Container-Tragrahmen 2 und dem Container C in die in Fig. 3 gezeigte Stellung verdreht werden, in der der Container mit seiner Längsachse senkrecht zur Längsachse des Fahrzeugs angeordnet ist. Bei dieser Drehbewegung werden die beiden auf dem oberen Drehteller angeordneten Laufschienenabschnitte 5a, die in der Fahrstellung senkrecht zur Fahrzeuglängsachse angeordnet sind, in die Fahrzeuglängsachse verdreht, so daß nach dem Wiederabsenken des gesamten Drehlagers mit dem Container die Laufschienenabschnitte 5a sich unmittelbar an die Laufschienen 5 anschließen, so daß anschließend beim Nachvorneverfahren des Gabelstapler-Hubsystems 6 dieser zunächst den Container aufnehmen und vom Container-Tragrahmen 2 abheben kann und anschließend nach rückwärts auf den Laufschienenabschnitten 5a bis zum Ende des Fahrzeugrahmens 1 verfahren kann, um beispielsweise in dieser Endstellung den Container C auf einen Eisenbahnwaggon überzuschieben. Es versteht sich von selbst, daß in gleicher Weise in dieser in Fig. 4 gezeigten Stellung auch ein Absetzen des Containers auf ein Fahrzeug erfolgen könnte, welches einen sehr viel höheren Fahrzeugaufbau aufweist und darüber hinaus selbstverständlich auch ein Absetzen auf den Boden möglich wäre. Zur Verhinderung eines Verkippens des Fahrzeugs bei diesem nach hinten überkragenden schweren Container ist eine ausfahrbare, mit Laufrollen 32 versehene, Abstützung 33 vorgesehen.

Entsprechend der Tatsache, daß die Längsverschubträger 29 des Container-Tragrahmens 2 außerhalb der Laufschienen 5 des Grundrahmens 4 des Ladeliftsystems liegen, ist selbstverständlich die vordere Stirnstrebe 34 des Container-Tragrahmens 2 mit einer diese beiden Laufschienen 5 übergreifenden, in den Zeichnungen nicht dargestellten, Aussparung versehen. In Fig. 3 ist vielmehr eine Drehstellung des Containers dargestellt, bei welcher man die hintere Stirnstrebe 35 des Container-Tragrahmens 2 erkennt.

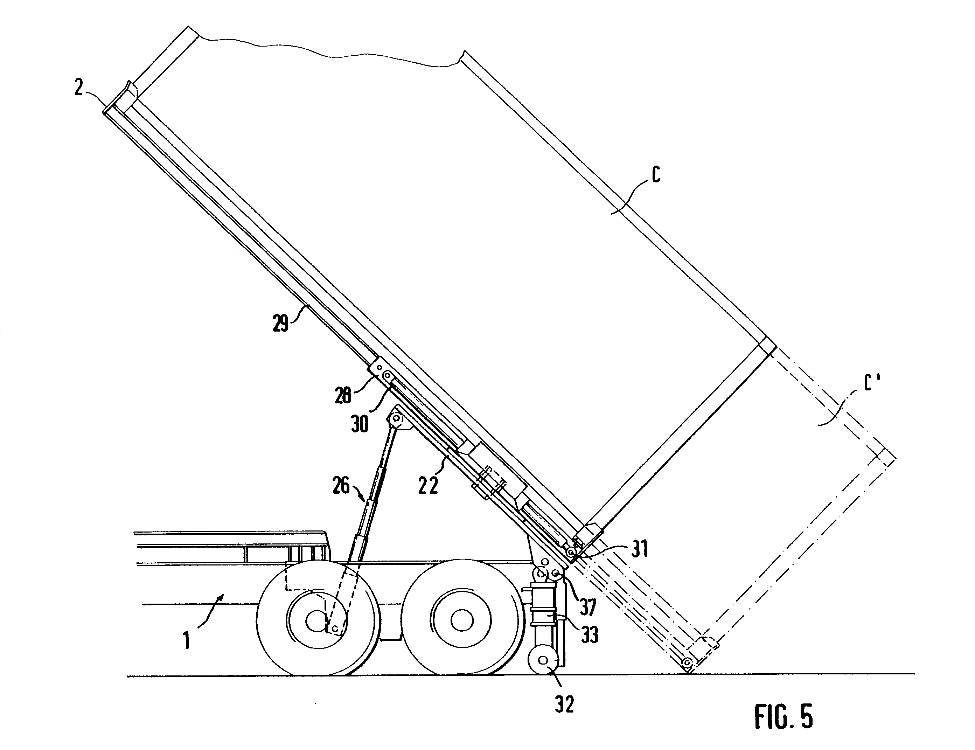

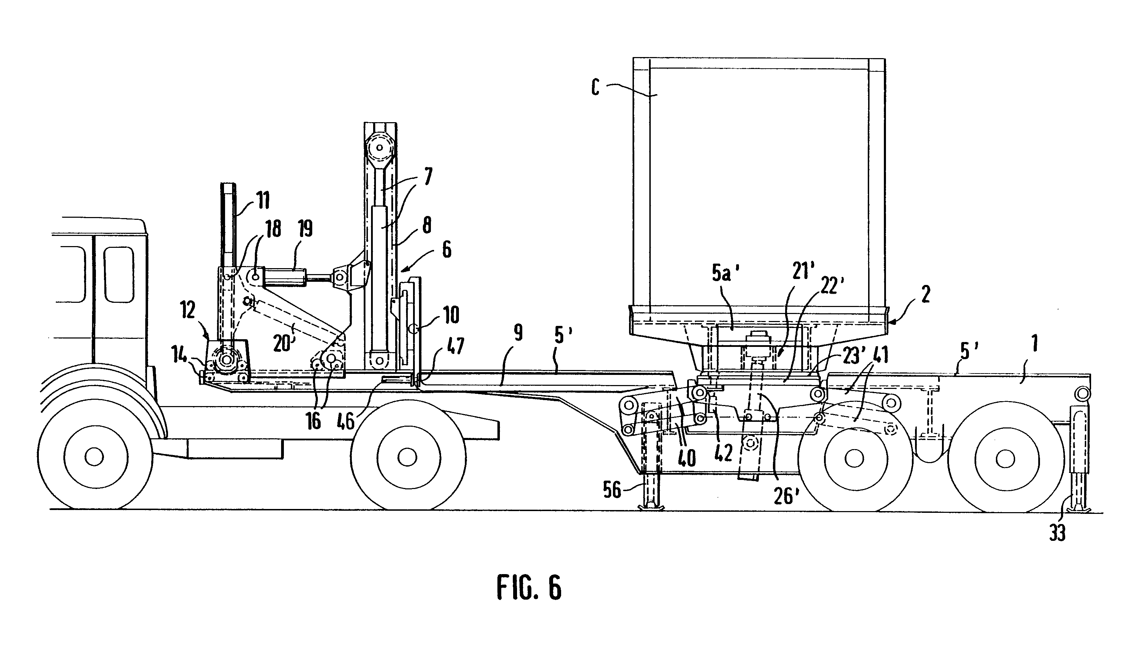

In Fig. 5 ist das erfindungsgemäße Fahrzeug nach den Figuren 1 bis 4 in einer Kippstellung des Containeraufbaus dargestellt, wozu zunächst die Lagerohren 36 schwenkbar mit dem hinteren Ende des Fahrzeuggrundrahmens 1 verbunden werden. Dies kann beispielsweise dadurch erfolgen, daß hydraulisch betätigte Bolzen 37 in die Ausnehmungen 38 der Lagerohren 36 einfahren. Anschließend werden die hinteren Hub-Schwenk-Zylinder 27 abgeschaltet bzw. auf Leerlaufstellung verbracht und nur die vorderen Hub-Schwenk-Zylinder 26 betätigt, so daß auf diese Weise das Ankippen in die Stellung nach Fig. 5 erreicht wird. Je nachdem, ob dabei mit Hilfe der Verschubzylinder der Container-Tragrahmen 2 mit dem Container C in der normalen Fahrstellung oder in der nach hinten verschobenen Stellung angeordnet ist, ergibt sich entweder die ausgezogene Stellung des Containers C in Fig. 5 oder die gestrichelte Stellung C' bei der das Ende des Tragrahmens mit dem daraufsitzenden Container bis zum Boden reicht. Die Verkippung in der ausgefahrenen Stellung ist wegen der Schwerpunktverschiebung vorteilhaft. In den Figuren 6 bis 9 ist eine zweite Ausführungsform eines erfindungsgemäßen Nutzfahrzeugs dargestellt, und zwar eines Sattelaufliegers, wobei der Fahrzeug-Hauptrahmen 1 des Lkw nach den Figuren 1 bis 5 durch den Sattelauflieger-Hauptrahmen 1 ersetzt ist. (Auf den Rahmen des Zugfahrzeugs für den Sattelauflieger kommt es in diesem Zusammenhang überhaupt nicht an.) Dabei ist die Ausbildung des Gabelstapler-Hubsystems 6 sowie des Grundrahmens des Ladeliftsystems und seines Antriebs in identisch der gleichen Weise ausgeführt wie beim Lkw nach den Figuren 1 bis 5, so daß lediglich die gleichen Bezugzeichen eingesetzt sind, ansonsten aber eine nähere Beschreibung dieses Systemteils sich erübrigt.

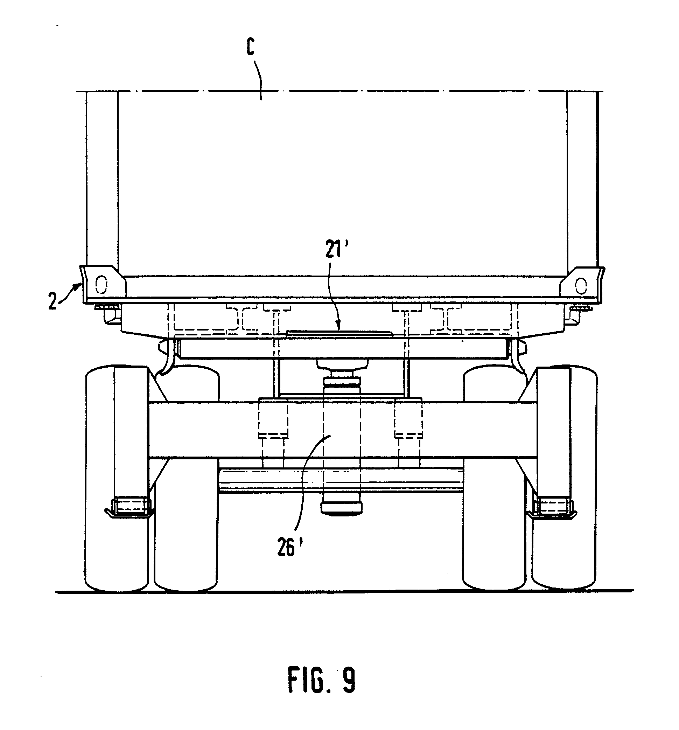

Abweichend von der Lkw-Lösung bietet jedoch die Sattelaufliegerlösung nach den Figuren 6 bis 9 die vorteilhafte Möglichkeit, das Drehlager 21' so anzuordnen, daß es unmittelbar unter dem Schwerpunkt des in Fahrstellung befindlichen Containers C angeordnet ist. so daß sich ein Verschieben des Containers C mit Hilfe der Verschubzylinder 30 der Lkw-Ausführungsform erübrigt. Der Container C mit seinem Container-Tragrahmen 2 kann vielmehr unmittelbar aus der Fahrstellung (die zur Vermeidung überflüssiger Zeichnungen gar nicht mit dargestellt ist) mit Hilfe des anhebbaren Drehlagers hochgehoben und um 90° in die in Fig. 6 gezeigte Stellung verschwenkt werden. Nach Verschwenken in diese Stellung nach Fig. 6 wird der Container-Tragrahmen 2 mit dem Container C wieder abgesenkt. wobei auch in diesem Fall entsprechend wieder Schienenabschnitte 5a auf dem oberen Drehteller des Drehlagers 21' die Lücke zwischen den Laufschienen 5' des Sattelaufliegers schließen. so daß die Gabelstapler-Hubvorrichtung 6 über die durch das Drehlager bedingte Lücke der Laufschienen 5' hinwegfahren und den vorher aufgenommenen Container C bis an das hinterste Ende des Grundrahmens 1 des Sattelaufliegers verfahren kann. wo in gleicher Weise ein Überschieben oder Absetzen des Containers auf den Boden oder andere Fahrzeuge stattfindet. Infolge der bei einem Sattelauflieger gegebenen Möglichkeit. das Drehlager nicht zwischen den Hinterachsen des Fahrzeugs. sondern nach vorne versetzt unmittelbar unter dem Schwerpunkt des Containers in seiner Fahrstellung anzuordnen. ergibt sich darüber hinaus auch eine vorteilhafte andere Ausbildung der Anhebvorrichtung des Drehlagers. Zum Anheben dient bei der Sattelauflieger-Variante nach den Figuren 6 bis 9 ein einzelner zentraler Hub-Schwenk-Zylinder 26', wobei der im wesentlichen der unteren Drehlagerplatte der Lkw-Variante entsprechende Drehkranzträger 22' mit Hilfe eines Parallelogrammestänges 40. 41 so geführt ist. daß das Anheben des Container-Tragrahmens 2 und damit auch des Containers C stets horizontal bzw. parallel zur Ebene des Aufliegerrahmens 1 erfolgt. Die Verdrehung des Drehkranzes 23' mit einer Innenverzahnung erfolgt mit Hilfe eines Drehservomotors 42. Wie man aus Fig. 9 erkennen kann. ermöglicht auch diese Sattelauflieger-Ausführungsform ein Verkippen des Containers C mit Hilfe des einzigen Hub-Schwenk-Zylinder 26', wobei die Herstellung der Schwenkverbindung am hinteren Ende des Container-Tragrahmens 2 zum Sattelauflieger-Grundrahmen 1 in entsprechender Weise erfolgen kann, wie bei der Lkw-Lösung nach den Figuren 1 bis 5.

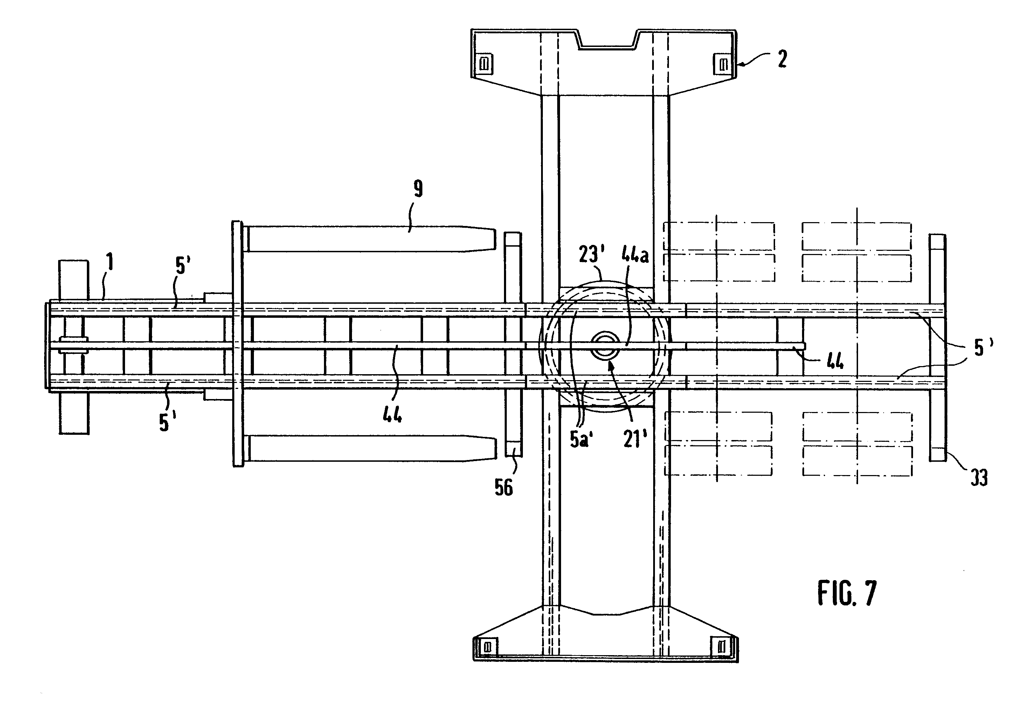

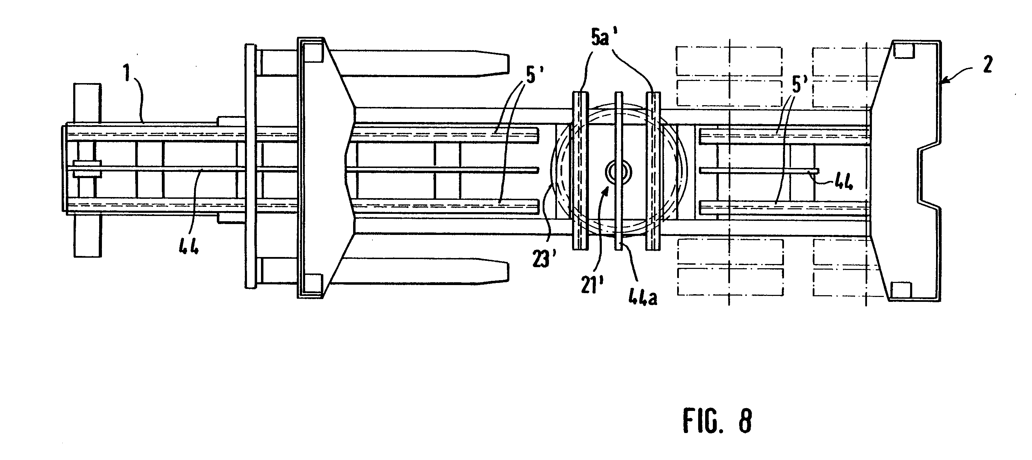

In Figuren 7 und 8 erkennt man die Zahnstangen 44 sowie den bei der Verschwenkung des Container-Tragrahmens ihre Lücke ausfüllenden Abschnitt 44a am Drehteller.

In Fig. 6 ist eine bei allen Ausführungsformen zweckmäßigerweise einsetzbare weitere Variante erkennbar, indem nämlich im Bereich der hinteren Enden der Gabelstaplerarme 9 Korrekturzylinder 46 vorgesehen sind, deren mit einer Platte 47 versehener Kolben sich an die Wand des Containers C anlegt. wobei durch separate Steuerung der beiden Korrekturzylinder 46 der beiden Gabelstaplerarme 9 eine gewisse Verschwenkung des Containers und damit letztendlich ein einfaches Geraderichten derart möglich ist. daß mit Sicherheit auch die Container-Eckverschlüsse in die entsprechenden Gegenteile des Container-Tragrahmens 2 eingreifen.

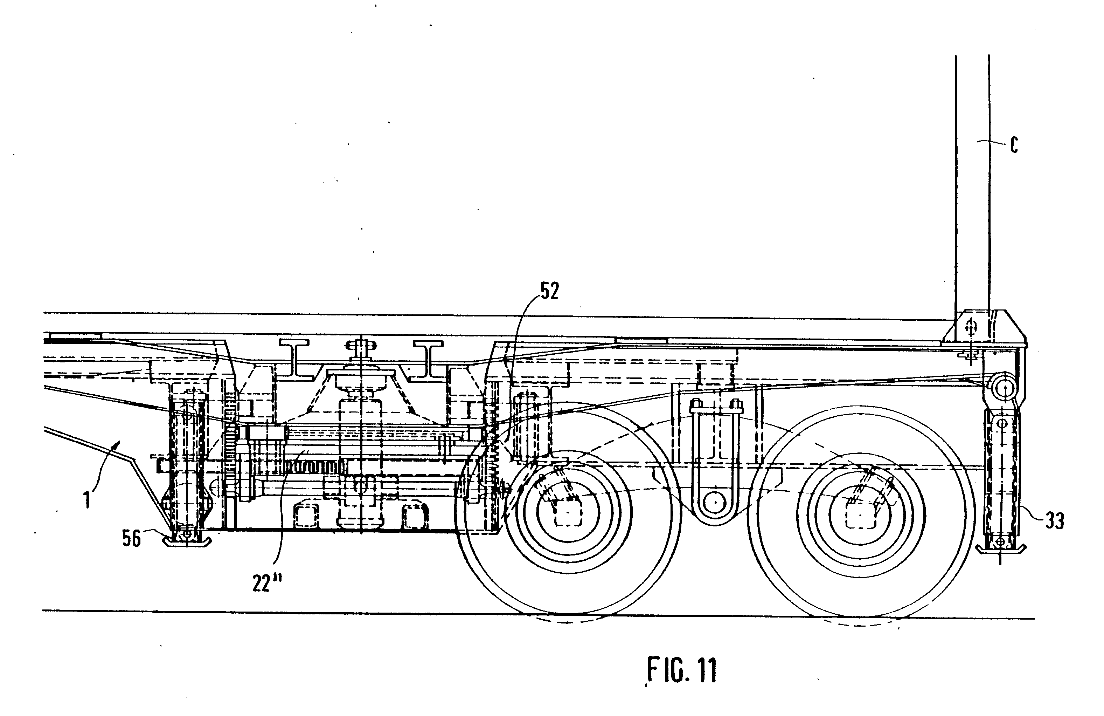

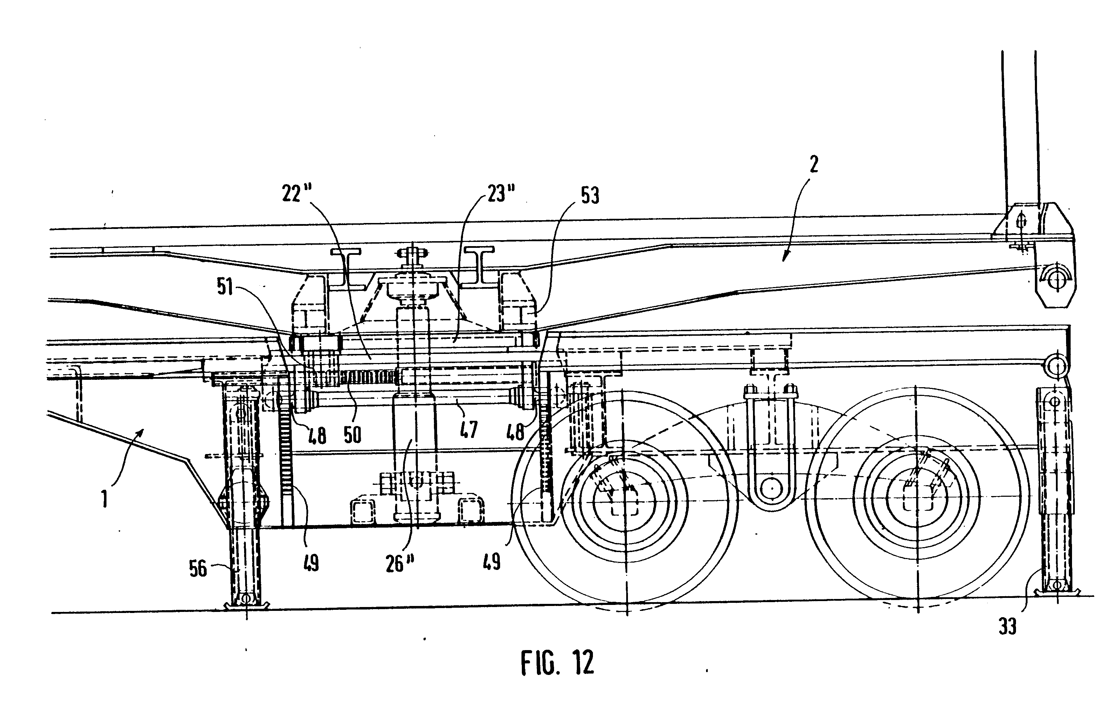

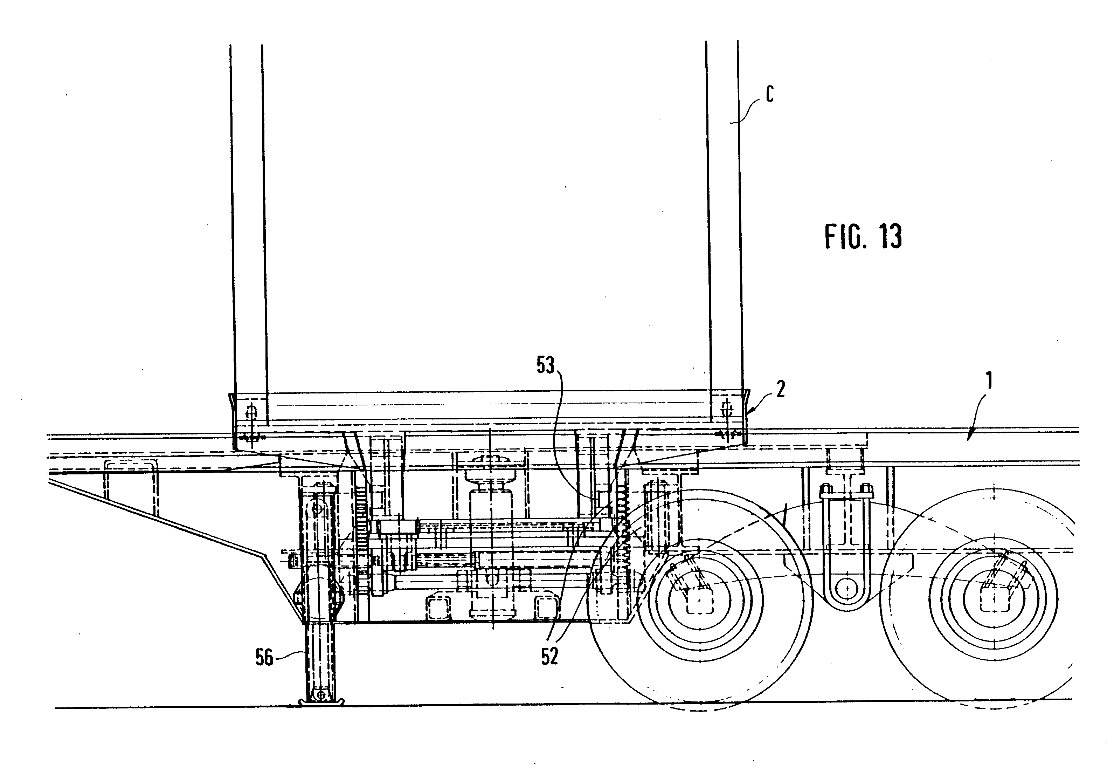

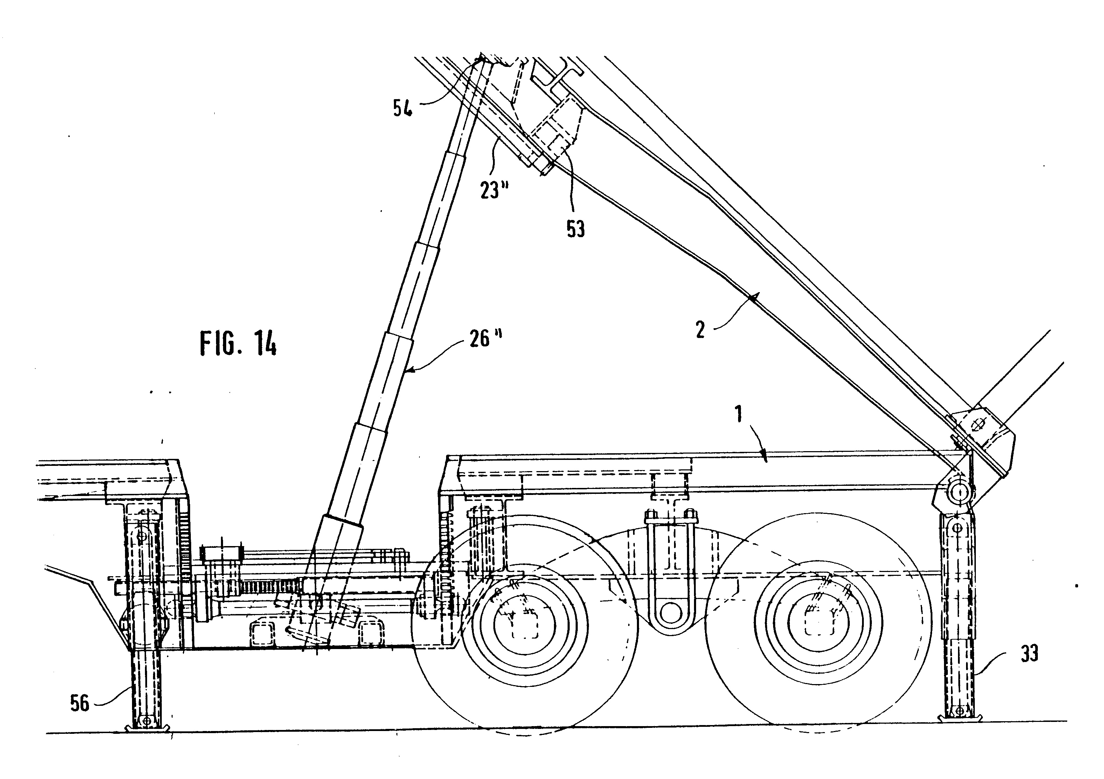

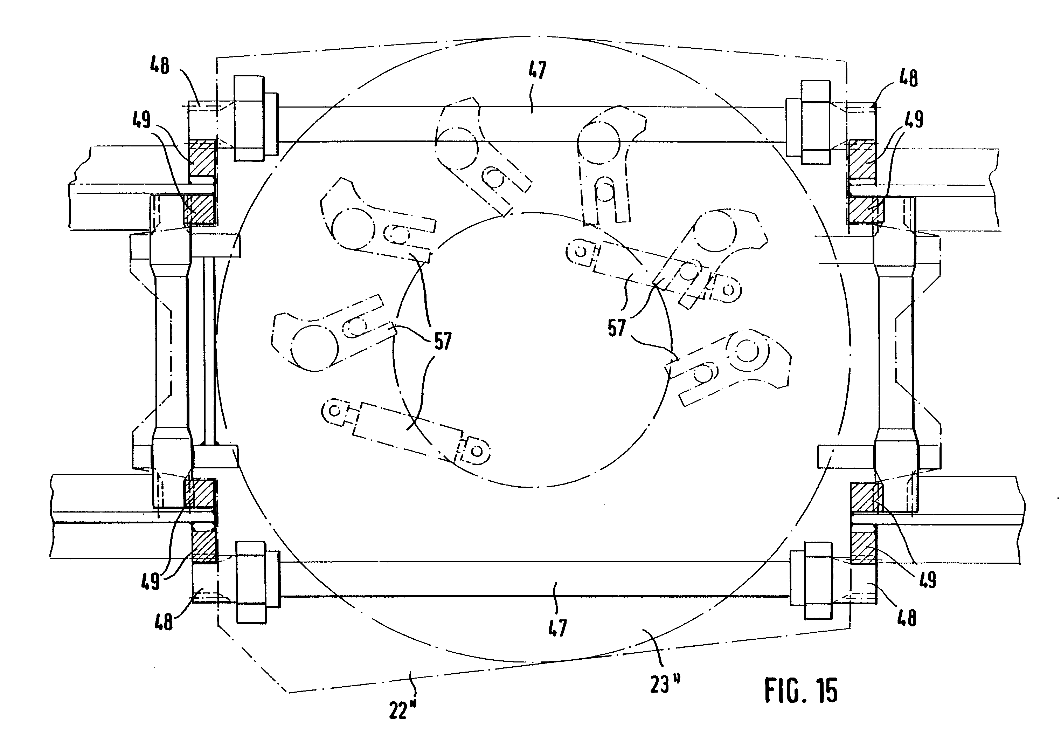

In den Figuren 11 bis 15 ist eine Abwandlung des Sattelaufliegers nach den Figuren 6 bis 9 dargestellt. wobei die Abwandlung im wesentlichen in der anders ausgebildeten Stabilisierung und Parallelführung des Drehlagers beim Anheben des Containers liegt. Die untere Drehlagerplatte 22″ trägt auf ihrer Unterseite längs ihrer vier Außenkanten, die parallel bzw. senkrecht zur Fahrzeuglängsachse gerichtet sind. drehbar gelagerte Wellen 47. die an beiden Enden mit Ritzeln 48 versehen sind, die wiederum in vertikale. im Fahrzeugrahmen starr verankerte Zahnstangen 49 eingreifen. Diese vier Wellen mit ihren acht in ebenfalls acht Zahnstangen 49 eingreifenden Ritzel 48 bilden einen Stabilisator, der beim Anheben des Container-Tragrahmens 2 auch bei starken Verkippungskräften infolge einer Versetzung des Schwerpunkts des Containers gegenüber der Drehachse des Drehlagers jede Neigung des Container-Tragrahmens 2 gegenüber dem Fahrzeugrahmen verhindert. Die Verbindung zwischen dem Container-Tragrahmen 2 und der unteren Tragplatte erfolgt dabei durch eine in Fig. 15 dargestellte Zentralverriegelung 57. welche den fest mit dem Container-Tragrahmen 2 verbundenen oberen Drehkranz 23″ mit der unteren Drehlagerplatte 22″ verbindet. so daß beim Anheben des Container-Tragrahmens 2 über den zentralen Hub-Schwenk-Zylinder 26″ die untere Drehlagerplatte 22″ zwangsweise mitgenommen wird und somit über die Zahnstangen und die Wellen ihre Stabilisierungsfunktion erfüllen kann. Zum Verkippen des Containers in die in Fig. 14 gezeigte Kippstellung muß lediglich vorher die Zentralverriegelung gelöst werden, so daß beim Betätigen des Hub-Schwenk-Zylinders 26″ die untere Drehlagerplatte 22″ nicht mitgenommen wird. sondern der Container-Tragrahmen 2 mit dem oberen Drehkranz 23″ einfach nach oben abgehoben werden kann. Die Verschwenkung des Drehkranzes 23″ erfolgt über eine horizontal liegende Zahnstange 50. die mit einem Zahnrad 51 kämmt, das seinerseits im oberen Abschnitt wiederum in die Verzahnung des Drehkranzes 23″ eingreift. Bei 52 erkennt man einen hydraulisch betätigbaren einschwenkbaren Drehriegel, der in eine Quertraverse 53 (vergl. Fig. 14) des Container-Tragrahmens eingreifen kann. um in der unteren Fahrstellung eine starre Verriegelung des Container-Tragrahmens 2 mit dem Fahrzeugrahmen 1 zu bewirken. Damit ist sichergestellt, daß beim Aufnehmen, Absetzen und Überschieben des Containers die auftretenden hohen Kippkräfte nicht ein völliges Abheben des Container-Tragrahmens 2 vom Fahrzeugrahmen 1 zur Folge haben können.

Mit 54 ist ein Druck-Schwenklager im Kopf des zentralen Hub-Schwenk-Zylinders 26" bezeichnet, während bei 55 in Fig. 1 eine Fernsehkamera angedeutet ist, die mit einem nicht gezeigten Monitor in der Fahrerkabine verbunden ist, so daß der Fahrer von der Fahrerkabine aus die gesamte Steuerung des Container-Aufnehmens und -Verschiebens durchführen und in allen Einzelheiten, bis zum genauen Einrasten in die Container-Eckverschlüsse, überwachen kann.

Schließlich erkennt man im Ausführungsbeispiel nach den Figuren 11 bis 15 neben den hinteren, hydraulisch ausfahrbaren Abstützungen 33 noch zusätzliche vordere, hydraulisch ausfahrbare Abstützungen 56, so daß der Drehlagerbereich beidseits durch insgesamt vier derartiger Abstützungen 33, 56 unabhängig vom Fahrgestell des Fahrzeugs am Boden abgestützt ist. Für Sonderfälle wäre es auch denkbar, die Gabelstaplerarme durch ein in die vier oberen Eckbeschläge eines Containers eingreifendes Hubgeschirr zu ersetzen.

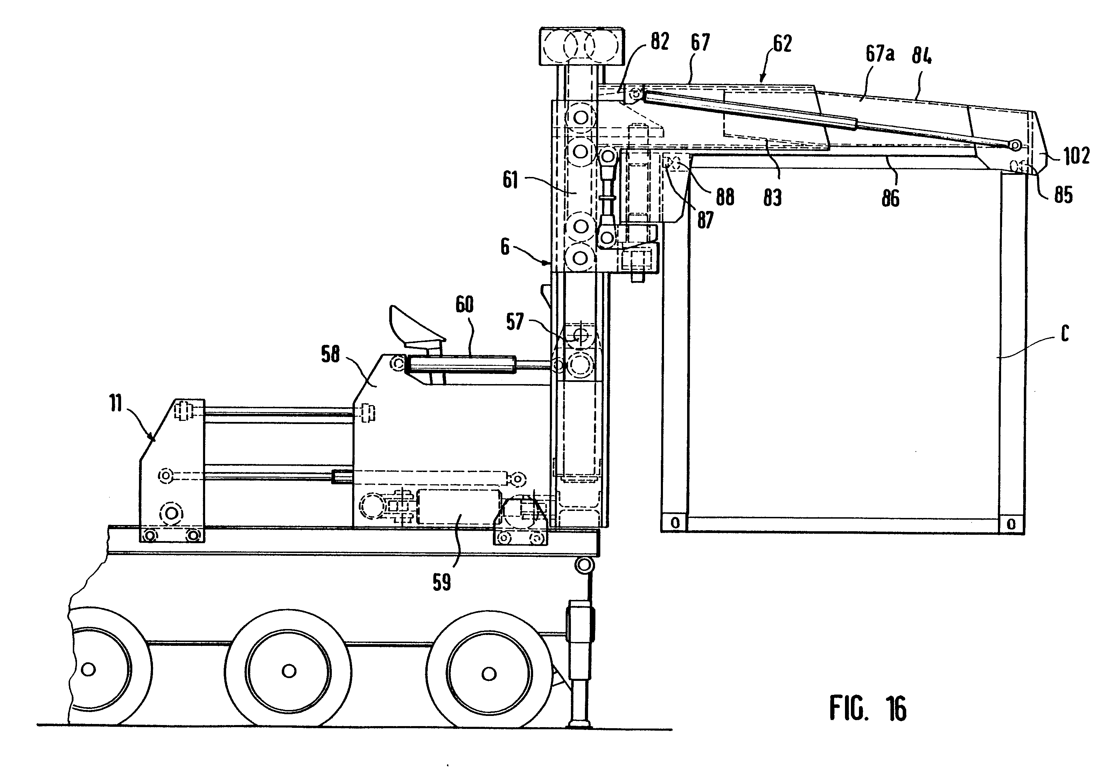

Eine derartige Ausbildung der Hubvorrichtung, bei der anstelle von Gabelstaplerarmen ein in die vier oberen Eckbeschläge eines Containers eingreifendes Hubgeschirr vorgesehen ist, ist in den Figuren 16 bis 20 im einzelnen dargestellt. Dabei ist das Hubgerüst 6 nicht am unteren Ende, sondern an einem dazwischenliegenden Punkt um eine Achse 57 schwenkbar an einem Lagerbock 58 des auf dem Fahrzeug verfahrbaren Schlittens angelenkt, wobei mit Hilfe eines horizontalliegenden unteren Hydraulikzylinders 59, der mit dem unteren Ende des Hubgerüsts 6 verbunden ist, sowohl die vertikale, als auch geneigte Stellungen des Hubgerüsts eingestellt werden können. Mit Hilfe zweier Hydraulikzylinder 60 läßt sich darüber hinaus auch eine Verschwenkung des Hubgerüsts um eine im wesentlichen vertikale Längsachse erzielen, wobei diese Verschwenkmöglichkeiten dazu dienen, das am Längsschlitten 61 des Hubgerüsts, welches ansonsten wie ein Gabelstapler-Hubgerüst ausgebildet sein kann, angelenkte Ladegeschirr 62 möglichst einfach in die oberen Container-Eckbeschläge eines Containers C einzuhaken.

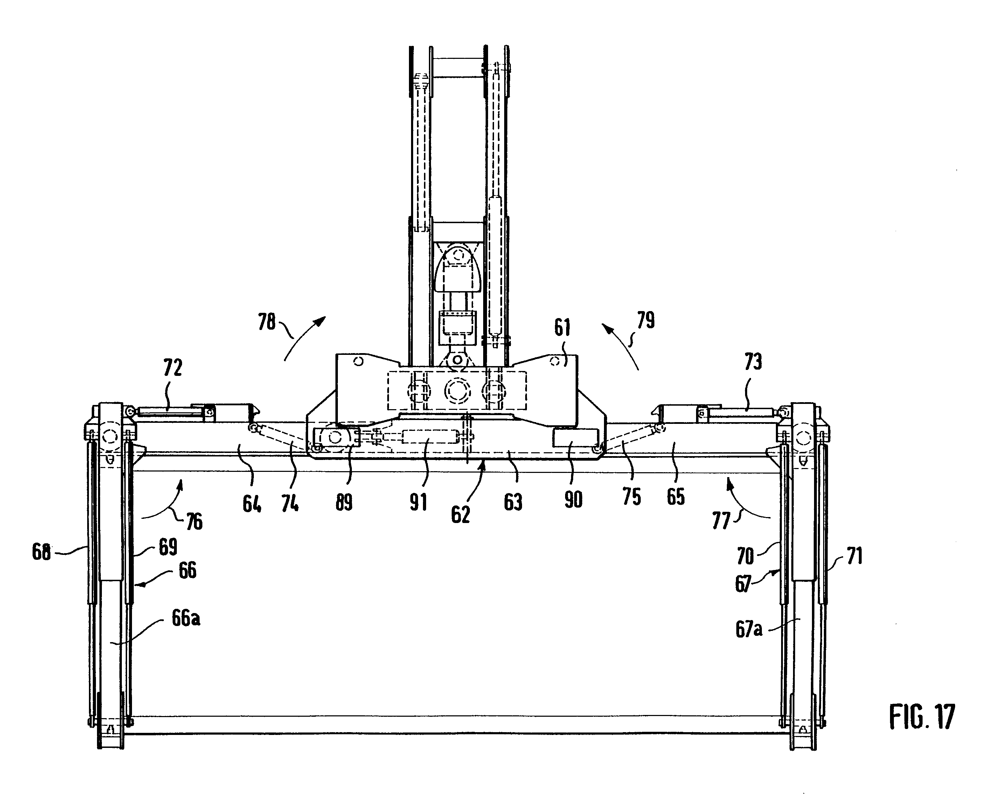

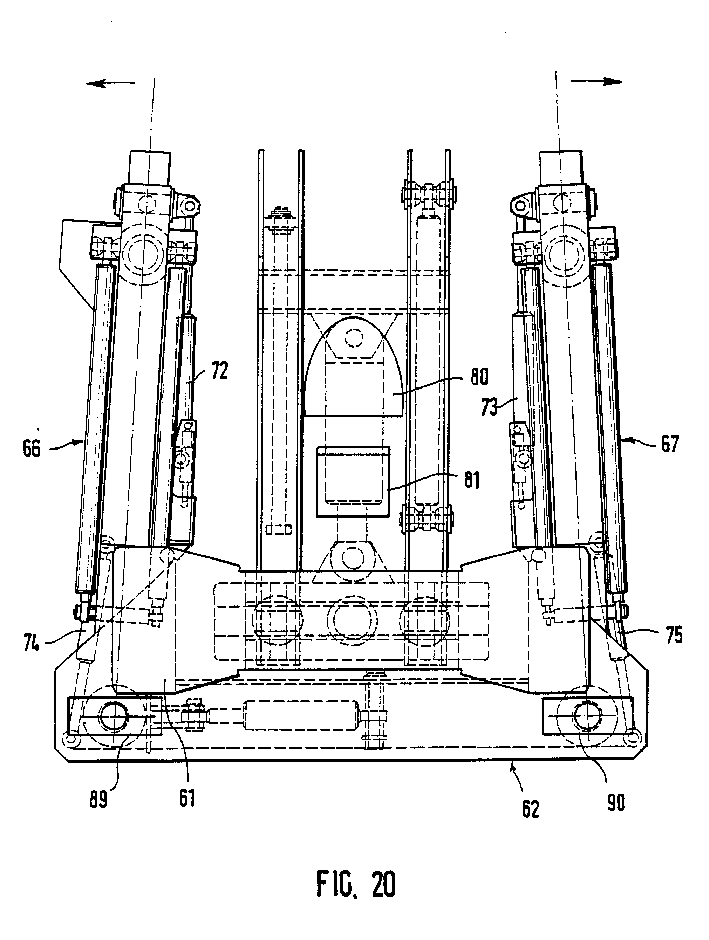

Das Ladegeschirr 62 umfaßt einen dreigeteilten Querarm, bestehend aus dem mittleren, am Längsschlitten 61 befestigten Abschnitt und den beiden äußeren Teilen 64 und 65, die gelenkig am mittleren Abschnitt 63 angelenkt sind, sowie zwei als Teleskoparme ausgebildeten Längsarmen 66 und 67, die ebenfalls über Gelenke mit vertikalen Schwenkachsen an den äußeren Querschenkelabschnitte 64 und 65 angelenkt sind. Das Ausfahren der Ausschubteile 66a und 67a der Längsarme erfolgt mit Hilfe von Hydraulikzylindern 68, 69, 70 und 71. In gleicher Weise erfolgt das Einschwenken und Ausschwenken sowohl der Längsarme gegenüber den Querarmen als auch der Querarmabschnitte 64 und 65 gegenüber dem Mittelabschnitt 63 mit Hilfe von Hydraulikzylindern 72, 73 und 74, 75. Ausgehend von der Betriebsstellung in Fig. 17 erfolgt das Zusammenlegen des Hubgeschirrs zunächst in der Weise, daß als erstes die Ausschubteile 66a eingezogen und damit die Längsarme 66, 67 ver kürzt werden. Anschließend werden diese mit Hilfe der Hydraulikzylinder 72 und 73, die dabei ausgefahren werden, in Richtung der Pfeile 76 bzw. 77 eingefaltet und somit in eine Parallelstellung über die Querarmabschnitte 64 und 65 verbracht. Gemeinsam mit diesen werden sie dann mit Hilfe der Hydraulikzylinder 74 und 75 nach vorne in Richtung der Pfeile 78 und 79 geschwenkt, so daß sie schließlich in die in Fig. 20 gezeigte Fahrstellung gelangen. In dieser liegen sie im dargestellten Ausführungsbeispiel über dem zwischen dem Container und dem Führerhaus anzuordnenden Schlitten und erhöhen damit nicht die Gesamthöhe des Fahrzeugs, wie es der Fall wäre, wenn das Hubgeschirr nicht einfaltbar wäre. Im Falle, daß nur ein kleinerer, ohne einen hochfahrbaren Fahrersitz 80 ausgerüsteter Schlitten verwendet wird, wäre es auch denkbar, das zusammengefaltete Hubgerüst, d.h. die nach vorne gefalteten Querarmabschnitte 64, 65 und die darüberliegenden Längsarme 66, 67 in der zusammengefalteten Fahrstellung mit nach vorne an das Führerhaus verfahrenem Schlitten, über das Führerhaus ragen zu lassen.

Bei Vorsehen eines vorzugsweise hochfahrbaren Sitzes für die Bedienung des Ladegeschirrs ist selbstverständlich auch ein Bedienungsterminal 81 am Sitz vorzusehen, an welchem der auf dem Sitz sitzende Fahrer alle Betätigungsorgane und Hydraulikzylinder-Hubvorrichtungen steuern kann.

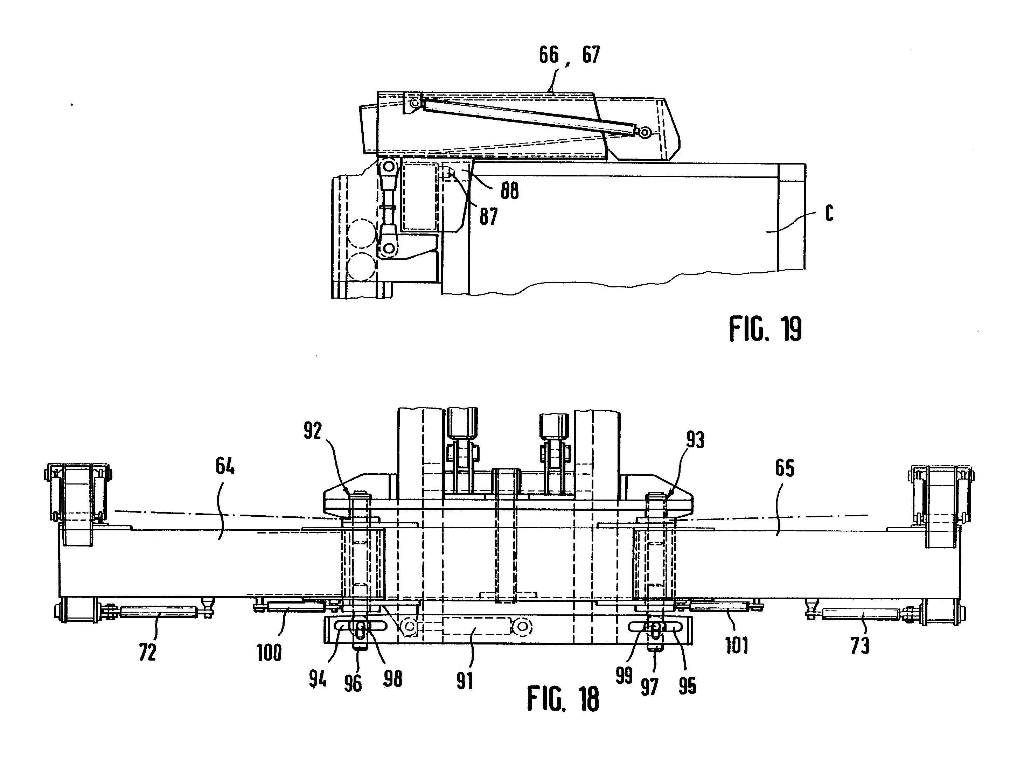

Die Längsarme 66, 67 sind mit oberseitigen Innenkeilführungen 82 versehen, die eine besondere Ausschwenkbewegung der Längsarme beim Ausfahren der Ausfahrteile 66a, 67a bewirken. Diese Ausfahrteile 66a, 67a, die am unteren inneren Ende mit einer nach oben gerichteten Abschrägung 83 und am oberen äußeren Ende mit einer nach unten gerichteten Abschrägung 84 versehen sind, werden in der eingezogenen Stellung durch diese Keilflächen 82 vorne angehoben (dabei legt sich die zunächst nach oben ragende Schrägfläche 83 auf die untere Innenfläche des Längsarms 87 an), derart, daß der vordere Kopf 102 mit den darin angeordneten, nach rückwärts weisenden Bolzen 85 zum Angreifen in die Container-Eckbeschläge in der eingezogenen Stellung der Längsarme 66, 67 nach oben ragt und somit nicht in Berührung mit der Deckfläche 86 des Containers C gelangen kann. Dies ermöglicht es, in der nicht ausgefahrenen Stellung der Längsarme 66, 67 (Fig. 19) zunächst die an den äußeren Querarmabschnitten 64, 65 angeordneten Bolzen 87 in die entsprechenden Container-Eckbeschläge 88 des Containers C einzufädeln, wobei die angehobenen äußeren Container-Eckbeschläge diese Einfädelbewegung überhaupt nicht behindern. Anschließend werden die Längsarme 66, 67 ausgefahren, wobei der Kopf 102 nach dem Freigeben des Ausfahrteils 66a, 67a durch die oberseitigen Innenkeilführungen 82 erst kurz vor der vollen Ausfahrstellung nach unten fällt und auf dem Containerdach nach außen rutscht, bis er schließlich über die Außenkante des Containers C gelangt. Dort fällt er dann in die untere Absenkstellung, in der Zapfen 85 dem zugehörigen Container-Eckbeschlag des Containers C genau gegenüberliegt. Durch eine geringe Rückzugbewegung des Ausschubteils 66a, 67a erfolgt dann sehr einfach und ohne daß der Bediener diese Einhakstellung überhaupt im Blickfeld hat, das Einhaken auch der äußeren Bolzen in die Container-Eckbeschläge. Damit ist dann die Verbindung beendet und der Container kann aufgenommen, abgesetzt, umgesetzt od.dgl. werden.

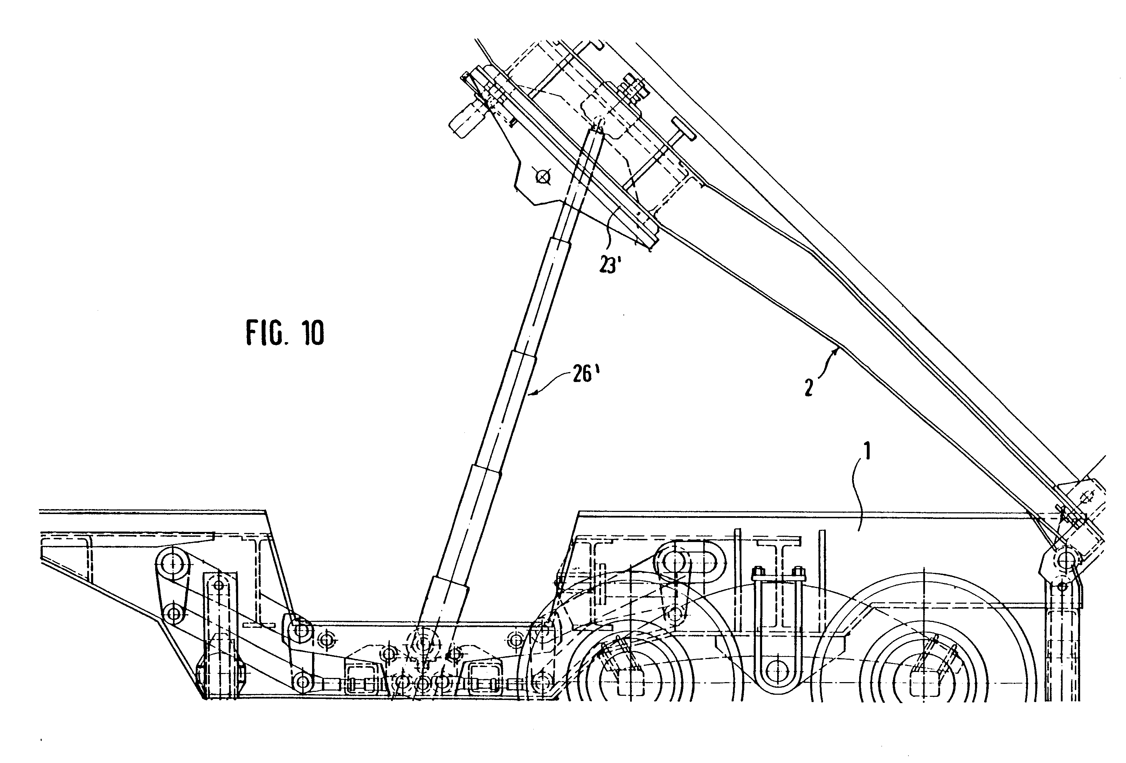

Entsprechend der Anordnung bei den Figuren 1 bis 15 ist auch bei der Variante mit einem Hubgeschirr nach den Figuren 16 bis 20 vorgesehen, daß der Schlitten mit einer ausfahrbaren Lastaufnahmeverstrebung 11 versehen ist.

Neben den bereits beschriebenen Freiheitsgraden, die auch bei nicht genauer Ausrichtung von Fahrzeug und Container zueinander ein einfaches Verbinden des Ladegeschirrs mit dem Container ermöglichen sollen, ist auch noch vorgesehen, daß die Verbindung des mittleren Abschnitts 63 des Querarms mit dem am Hubgerüst auf-und niederfahrbaren Längsschlitten 61 Langlochverbindungen 89 und 90 umfaßt, so daß das gesamte, aus dem Querarm 62 und den Längsarmen 66, 67 bestehende Ladegeschirr um die Längsausdehnung dieser Langlöcher 89, 90 seitlich gegenüber dem Hubgerüst verschiebbar ist. Zur Verschiebung dient dabei der Hydraulikzylinder 91. Diese Seitenverschiebung ermöglicht den Ausgleich von Fahrfehlern, durch die die Längsachse des Fahrzeugs nicht genau mit der Mittelachse des Containers zusammenfällt.

Neben diesen Querkorrekturen kann durch die spezielle Ausbildung der Gelenke 92 und 93 zwischen dem Mittelabschnitt 63 und den äußeren Abschnitten 64 und 65 des Querarms 62 auch noch eine horizontale Korrektur des Ausschwenkbereichs des Ladegeschirrs erzielt werden. Man erkennt, daß durch die Langlochführungen 94 und 95 für die Lagerbolzen 96 und 97 durchsetzende Stifte 98, 99 auch eine Horizontalkorrektur entsprechend den strichpunktierten Linien in Fig. 18 möglich ist. Diese Horizontalkorrektur wird dann vorgenommen mit Hilfe des Hydraulikzylinders 91

Anstelle des Hydraulikmotors als Schlittenantrieb 13 könnte auch ein Hydraulikzylinder, insbesondere zwei Zylinder in Tandemform verwendet werden.

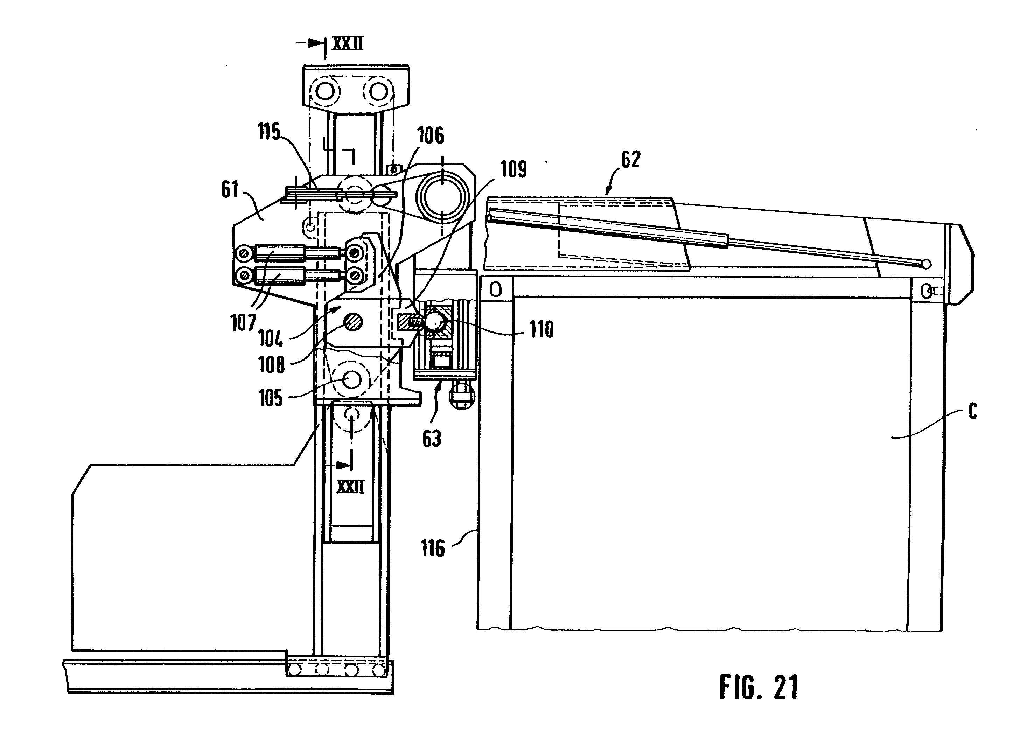

In den Figren 21 bis 24 ist eine abgewandelte Ausführungsform einer erfindungsgemäßen Vorrichtung dargestellt, bei welcher der Querarm 62, speziell dessen Mittelabschnitt 63 des zusammenfaltbaren Ladegeschirrs, pendelnd am Längsschlitten 61 der hydraulischen Hubvorrichtung aufgehängt ist. Die Aufhängung über dem Königszapfen 102 und die Lagerwelle 103 bildet eine quasi kardanische Aufhängung des Mittelabschnitts 63 und damit des gesamten Ladegeschirrs, so daß sich das Ladegeschirr hervorragend an die jeweilige Position des Containers anpassen kann. Mit anderen Worten ausgedrückt ist es ohne weiteres möglich, das Ladegeschirr auch mit einem verkippt angeordneten Container zu verbinden, wobei es dann selbstverständlich nachträglich notwendig ist, das Ladegeschirr in die richtige horizontale Position zu bringen derart, daß der Container wirklich horizontal auf das Fahrzeug aufgesetzt wird. Umgekehrt ist auf diese Art und Weise auch ein Absetzen des Containers auf einer unebenen Fläche problemlos möglich. Der Mittelabschnitt 63 des Querarms ist, wie man insbesondere in den Figuren 21, 23 und 24 erkennen kann, mit Hilfe einer hydraulischen Stellvorrichtung 104 gegen die Wand 116 des Containers C verspreizbar. Diese hydraulische Stellvorrichtung umfaßt beidseits des Königszapfens 102 angeordnete, um horizontale Achsen 105 schwenkbar angeordnete Schwenkarme 106, an deren drei Enden Hydraulikzylinder 107 angreifen. Ebenso schwenkbar um Achsen 108 gelagert sind an den Schwenkarmen 106 Tragarme 109 befestigt, die am vorderen Ende mit Kugelköpfen 110 versehen sind. Diese Kugelköpfe 110 greifen in Querschlitze 111 ein, wobei durch kugelgelagerte Führungsrollen 112 eine leichtgängige Verschiebbarkeit gewährleistet ist. Diese Art der Verbindung ermöglicht seitliche Verschiebungen und auch Pendelbewegungen um die Achse 103 entsprechend dem Doppelpfeil 113 des Ladegeschirrs.

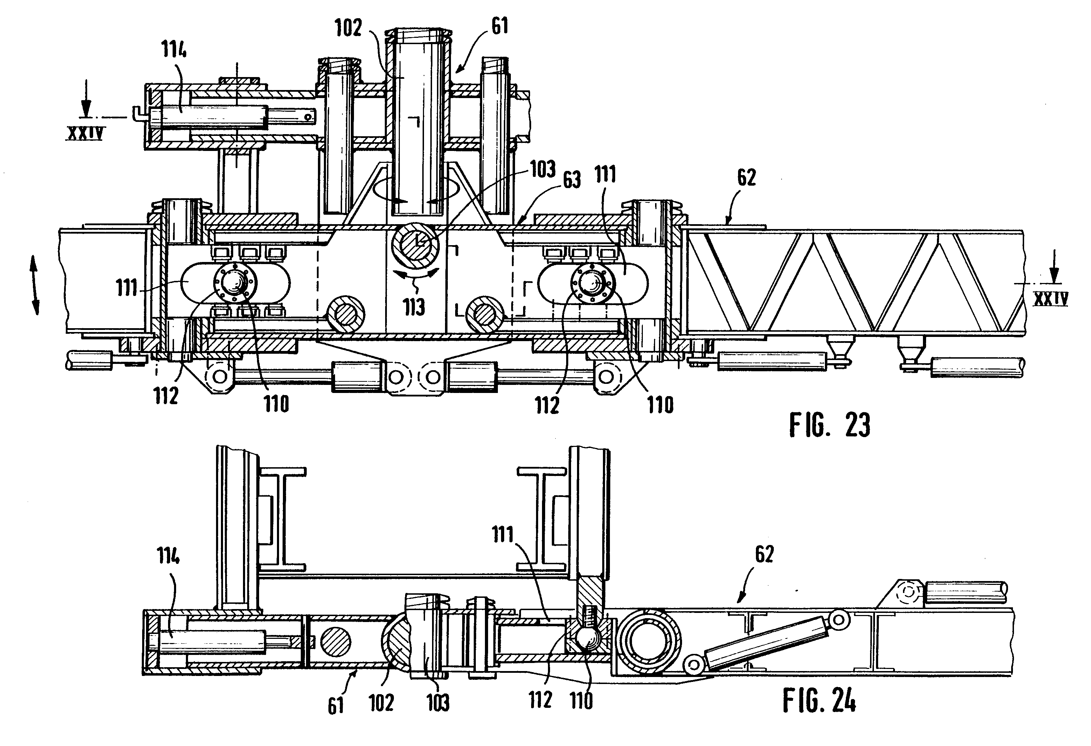

Durch gleichlaufende Verstellung der beidseits des Königszapfens 102 angeordneten Doppelzylinder 107 erfolgt ein Abstützen und Neigen des Containers, während bei gegenläufiger Verstellung der links und rechts angeordneten Doppelzylinder ein Drehen des Containers um die Achse des Königszapfens 102 stattfindet. Die beidseits des Königszapfens 102 angeordneten Hydraulikzylinder 114, von denen man in Fig. 23 nur einen erkennt. dienen der seitlichen Verschiebung des Königszapfens und damit der seitlichen Verschiebung des Ladegeschirrs (Spreaders) insgesamt. Die Blattfederanordnung 115 hält das Ladegeschirr bei drucklosem Zustand. d.h. bei leerlaufenden Hydraulikzylindern 107 in der Horizontalien.

## Ansprüche

1. Nutzfahrzeug mit einem Fahrzeugrahmen. ggfs. mit aufgesetztem Hilfsrahmen, zur Aufnahme eines wechselbaren langgestreckten Aufbaus (Container). in dem auf Laufschienen ein mit einer Antriebsvorrichtung versehener längsverschieblicher Schlitten gelagert ist, der eine hydraulische Hubvorrichtung zum Absetzen und Aufnehmen des Aufbaus trägt. sowie mit einer Abstützung am hinteren Ende des Fahrzeugrahmens. gekennzeichnet durch ein im Fahrzeugrahmen (1) ortsfest gelagertes. parallel zum Fahrzeugrahmen anhebbares Drehlager (21, 21') mit einer unteren. über einen Niveauausgleich parallel zum Fahrzeugrahmen vertikal anhebbaren, Drehlagerplatte (22, 22') und einem drehbaren oberen Drehteller (23, 23') zum Anheben und Verschwenken eines den Aufbau (C) tragenden. lösbar auf dem Fahrzeugrahmen (1) verriegelbaren Container-Tragrahmens (2) mit Container-Eckverschlüssen (3) zwischen der Fahrstellung und einer um 90° verdrehten Aufnahme-bzw. Absetzstellung, in welcher am Drehlager (21, 21') befestigte. in der Fahrstellung quer zur Fahrzeuglängsachse verlaufende. Schienenabschnitte (5a, 5a') die Lücke der Laufschienen (5, 5') des Fahrzeugrahmes (1) schließen.

2. Nutzfahrzeug nach Anspruch 1, dadurch gekennzeichnet, daß der Schlitten auf der der Hubvorrichtung abgelegenen Vorderseite mit einer ausfahrbaren, ggfs. schwenkbar angelenkten Lastaufnahmestrebe (11) versehen ist, deren unteres Ende verfahrbar an den Schlittenlaufschienen (5) gehaltert ist.

3. Nutzfahrzeug nach Anspruch 2, gekennzeichnet durch einen hydraulischen Streben-Schwenkzylinder (20) zum Ausfahren der Lastaufnahmestrebe (11).

4. Nutzfahrzeug nach einem der Ansprüche 1 bis 3. dadurch gekennzeichnet, daß der Schlitten mit einem vorzugsweise im Fußlagerteil (12) der Lastaufnahmestrebe (11) integrierten Hydraulikmotor (13) mit vorzugsweise paarweise angeordneten. sich an einer stehenden - durch ein Zwischenstück am Drehlager (21, 21') ergänzbaren - Zahnstange (44, 44a) des Fahrzeugrahmens abwälzenden Zahnrädern versehen ist.

5. Nutzfahrzeug. insbesondere 4-achsiger Lkw. nach einem der Ansprüche 1 bis 4. dadurch gekennzeichnet. daß die untere Drehlagerplatte (22) durch. vorzugsweise vier. Hub-Kipp-Zylinder (26. 27) mit hydraulischer Gleichlaufsteuerung anhebbar ist.

6. Nutzfahrzeug. insbesondere Sattelauflieger. nach einem der Ansprüche 1 bis 4. dadurch gekennzeichnet. daß die untere Drehlagerplatte (22') mittels am Fahrzeugrahmen (1) angelenkten Parallelogrammführungsgestängen (20. 41) horizontal geführt von einem zentralen Hub-Schwenk-zylinder (26') anhebbar ist.

7. Nutzfahrzeug nach Anspruch 6. dadurch gekennzeichnet, daß der obere Drehteller einen Drehkranz (23') mit einem Drehservomotor (42) umfaßt.

8. Nutzfahrzeug nach einem der Ansprüche 1 bis 4 oder 7. dadurch gekennzeichnet, daß die untere Drehlagerplatte (22") über eine Zentralverriegelung (57) lösbar mit dem oberen Drehkranz (23") ver bindbar ist und durch Zahnstangenführungen zwangsweise parallel zum Fahrzeugrahmen (1) geführt ist.

9. Nutzfahrzeug nach Anspruch 8. dadurch gekennzeichnet, daß auf der Unterseite der unteren Drehlagerplatte (22"), vorzugsweise längs aller vier Seitenkanten, drehbar gelagerte Wellen (47) befestigt sind. die an den Enden mit in ortsfest im Fahrzeugrahmen (1) angeordnete Zahnstangen (49) eingreifenden Ritzeln (48) versehen sind.

10. Nutzfahrzeug nach einem der Ansprüche 5 bis 9. gekennzeichnet durch in allen vier Ecken angeordnete Anschläge in der oberen Endverschiebestellung des Drehlagers.

11. Nutzfahrzeug nach einem der Ansprüche 6 bis 10. dadurch gekennzeichnet. daß der mit dem Container-Tragrahmen (2) verbundene Kopf des zentralen Hub-Schwenk-Zylinders (26") ein Druck-Schwenklager (54) enthält.

12. Nutzfahrzeug nach einem der Ansprüche 1 bis 11. gekennzeichnet durch eine, vorzugsweise hydraulisch betätigbare, Verriegelung (52. 53) des Drehlagers in der unteren Endstellung.

13. Nutzfahrzeug nach Anspruch 12. gekennzeichnet durch in eine Quertraverse (53) des Container-Tragrahmens (2) vorzugsweise hydraulisch einschwenkbare Riegel (52).

14. Nutzfahrzeug, insbesondere Sattelauflieger. nach einem der Ansprüche 1 bis 13. dadurch gekennzeichnet, daß der Fahrzeugrahmen (1) vor und hinter dem Drehlager (21") durch vorzugsweise hydraulisch ausfahrbare Abstützungen (33. 56) am Boden abstützbar ist.

15. Nutzfahrzeug, insbesondere Sattelauflieger. nach einem der Ansprüche 1 bis 14. dadurch gekennzeichnet, daß das Drehlager (21') unter dem Schwerpunkt des in Fahrstellung befindlichen Aufbaus (C) angeordnet ist.

16. Nutzfahrzeug, insbesondere 4-achsiger Lkw, nach einem der Ansprüche 1 bis 15, dadurch gekennzeichnet, daß das Drehlager (21) zwischen den Hinterachsen angeordnet ist und daß der Container-Tragrahmen (2) mittels Verschubzylindern (30) nach hinten in eine Stellung verschiebbar ist, in welcher der Schwerpunkt des Aufbaus (C) im wesentlichen mit dem Drehpunkt des Drehlagers (24) zusammenfällt.

17. Nutzfahrzeug nach Anspruch 16, dadurch gekennzeichnet, daß auf dem oberen Drehteller (23) Führungsrohre (28) befestigt sind, in denen Längsverschubträger (29) des Container-Tragrahmens (2) gleitend verschiebbar gelagert sind.

18. Nutzfahrzeug nach Anspruch 17, dadurch gekennzeichnet, daß die Verschubzylinder (30) außen an den Führungsrohren (28) befestigt sind und mit den Enden (31) ihrer Kolben an den hinteren Enden der Längsverschubträger (29) angreifen.

19. Nutzfahrzeug nach einem der Ansprüche 16 bis 18, gekennzeichnet durch am Fahrzeugrahmen (1) befestigte Auflagerollen (43) für die Längsverschubträger (29) des Container-Tragrahmens (2).

20. Nutzfahrzeug nach einem der Ansprüche 1 bis 19, dadurch gekennzeichnet, daß die vordere, an ihren Enden die vorderen Container-Eckverschlüsse (3) tragende Stirnwandstrebe des Container-Tragrahmens (2) mit einem die Führungsschienen (5) des Schlittens übergreifenden Ausschnitt versehen ist.

21. Nutzfahrzeug nach einem der Ansprüche 1 bis 20, dadurch gekennzeichnet, daß der Container-Tragrahmen (2) an seinem hinteren Ende schwenkbar mit dem Fahrzeugrahmen (1) verbindbar und durch Hub-Schwenk-Zylinder (26, 26') zusammen mit dem Container (C) in eine Kippstellung anhebbar ist.

22. Nutzfahrzeug nach einem der Ansprüche 1 bis 21, gekennzeichnet durch eine an der hydraulischen Hubvorrichtung befestigte, mit einem Monitor in der Fahrerkabine verbundene Fernsehkamera (55).

23. Nutzfahrzeug nach einem der Ansprüche 1 bis 21, gekennzeichnet durch einen am Schlitten befestigten, vorzugsweise anhebbaren Sitz mit einer Steuervorrichtung zur Betätigung der Hubvorrichtung.

24. Nutzfahrzeug nach einem der Ansprüche 1 bis 23, dadurch gekennzeichnet, daß die Hubvorrichtung (6) als Gabelstapler ausgebildet ist.

25. Nutzfahrzeug insbesondere nach einem der Ansprüche 1 bis 23, dadurch gekennzeichnet, daß die Hubvorrichtung (6) ein Hubgerüst mit einem in die oberen Container-Eckverschläge eingreifenden Ladegeschirr (62) mit einem im wesentlichen U-förmigen Träger umfaßt, dessen Quer- und dessen Längsarme (62; 66, 67) in eine Fahrstellung zusammenfaltbar sind.

26. Nutzfahrzeug nach Anspruch 25, dadurch gekennzeichnet, daß der Querarm (62) aus drei Teilen (63, 64, 65) mit Zwischengelenken (92, 93) und endseitigen Gelenken zum Anlenken der Längsarme (66, 67) mit jeweils vertikalen Schwenkachsen besteht.

27. Nutzfahrzeug nach Anspruch 26, dadurch gekennzeichnet, daß die Gelenke so ausgebildet sind, daß die nach innen gegen die entsprechenden Außenabschnitte (64, 65) des Querarms (62) gefalteten Längsarme (66, 67) gemeinsam mit diesen nach vorne in Fahrtrichtung schwenkbar sind.

28. Nutzfahrzeug nach einem der Ansprüche 25 bis 27, dadurch gekennzeichnet, daß die Längsarme (66, 67) als vorzugsweise hydraulisch betätigbare Teleskoparme ausgebildet sind.

29. Nutzfahrzeug nach Anspruch 28, dadurch gekennzeichnet, daß die Längsarme (66, 67) mit oberseitigen Innenkeilführungen (82) für die unterseitig abgeschrägten Ausschubteile (66a, 67a) derart versehen sind, daß deren freie, einen Bolzen (85) zum Eingreifen in einen Container-Eckbeschlag tragende Enden vor dem vollständigen Ausschieben aus einer angehobenen Stellung in eine Absenkstellung gelangen, in der die Bolzen (85) mit den zugehörigen Container-Eckbeschlägen fluchten.

30. Nutzfahrzeug nach einem der Ansprüche 25 bis 29, dadurch gekennzeichnet, daß das Hubgerüst (6) mit einem Längsschlitten (61) zur Anhebung des Ladegeschirrs (62) um eine horizontale Achse (57) gegenüber der Senkrechten neigbar ist.

31. Nutzfahrzeug nach Anspruch 30, dadurch gekennzeichnet, daß das Hubgerüst (6) zwischen seinen Enden an einem Lagerbock (58) des Schlittens gelagert und am unteren Ende mit einem vorzugsweise horizontal liegenden Hydraulikzylinder (59) verbunden ist.

32. Nutzfahrzeug nach Anspruch 30 oder 31, dadurch gekennzeichnet, daß das Hubgerüst (69 um seine Längsachse schwenkbar ist.

33. Nutzfahrzeug nach einem der Ansprüche 25 bis 32, dadurch gekennzeichnet, daß das Ladegeschirr (62) seitlich gegenüber dem Hubgerüst (6) verschiebbar ist.

34. Nutzfahrzeug nach Anspruch 3, dadurch gekennzeichnet, daß der Mittelabschnitt (63) des Querarms (62) über Langlochverbindungen (89, 90) am Längsschlitten (61) befestigt ist.

35. Nutzfahrzeug nach einem der Ansprüche 25 bis 34, dadurch gekennzeichnet, daß die Gelenke (92, 93) zwischen dem Mittelabschnitt (63) des Querarms (62) und den äußeren Abschnitten (64, 65) eine horizontale Korrektur des Ausschwenkbereichs durch Verschwenkung der Achsen der äußeren Abschnitte (64. 65) gegenüber der Achse des Mittelabschnitts (63) nach oben oder unten ermöglichen.

36. Nutzfahrzeug nach einem der Ansprüche 25 bis 35. dadurch gekennzeichnet. daß der Querarm (62). insbesondere dessen Mittelabschnitt (63). des zusammenfaltbaren Ladegeschirrs pendelnd am Längsschlitten (61) aufgehängt und durch hydraulische, seitliche Verschiebungen ermöglichende Stellvorrichtungen (104) gegen den Container (C) verspreizbar ist.

37. Nutzfahrzeug nach Anspruch 36. dadurch gekennzeichnet. daß das Ladegeschirr durch eine Federanordnung, vorzugsweise eine Blattfeder (115). auslenkbar in einer horizontalen Mittelstellung gehaltert ist.

38. Nutzfahrzeug nach Anspruch 36 oder 37. dadurch gekennzeichnet. daß die Stellvorrichtungen (104) in mit Führungsrollen (112) oder Gleitteilen versehene Querschlitze (111) eingreifende Kugelköpfe (110) aufweisen.

39. Nutzfahrzeug nach einem der Ansprüche 36 bis 38. dadurch gekennzeichnet. daß beidseits der pendelnden Aufhängung gleich- und gegenläufig betätigbare Stellvorrichtungen (107) angeordnet sind.

40. Nutzfahrzeug nach Anspruch 38 oder 39. daduch gekennzeichnet. daß die Stellvorrichtungen (104) die Kugelköpfe (110) tragende. um horizontale Achsen (105) schwenkbare. einarmige Schwenkarme (106) aufweisen, den deren Enden die Hydraulikzylinder (107) angreifen.

41. Nutzfahrzeug nach Anspruch 40, dadurch gekennzeichnet. daß beidseits des Königszapfens (102) je zwei Hydraulikzylinder an den Schwenkarmen (106) angreifen.

42. Nutzfahrzeug nach Anspruch 40 oder 41, dadurch gekennzeichnet. daß die Kugelköpfe (110) an um horizontale Achsen (108) schwenkbar mit den Schwenkarmen (106) verbundeenen Tragarmen (109) befestigt sind.

FIG. 1

FIG. 2

FIG. 3

FIG. 4

0 285 698

FIG. 5

FIG. 6

0 285 698

FIG. 7

FIG. 8

0 285 698

C

21'

2

26'

FIG. 9

FIG. 10

33

C

52

22"

56

1

FIG. 11

FIG. 12

0 285 698

FIG. 13

FIG. 14

54

23"

53

26"

2

1

33

56

0 285 698

FIG. 15

0 285 698

FIG. 16

FIG. 17

**FIG. 19**

**FIG. 18**

FIG. 20

FIG. 21

0 285 698

FIG. 22

FIG. 23

FIG. 24

0 285 698

Europäisches
Patentamt

# EUROPÄISCHER RECHERCHENBERICHT

Nummer der Anmeldung

EP 87 11 4262

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DE-U-8 617 393  (WILCKE)<br>* ganzes Dokument *<br><br>--- | 1-5,14,<br>21,25,<br>30 | B 60 P    1/64 |
| A | DE-C-2 560 381  (BOTTENSCHEIN)<br>* Ansprüche 1,2; Figuren 1,3,6-8 *<br>--- | 1,4,15 | |
| A | GB-A-1 008 840  (STEADMAN INDUSTRIES)<br>* Figuren 1,2,4 *<br>--- | 1 | |
| A | AT-B-  340 976  (VOEST-ALPINE MONTAN)<br>--- | | |
| A | FR-A-2 511 957  (GOLDHOFER<br>FAHRZEUGWERK)<br>--- | | |
| D,A | DE-U-1 893 821  (MIAG)<br>--- | | |
| D,A | DE-A-2 753 962  (VOLVO)<br>----- | | |

RECHERCHIERTE
SACHGEBIETE (Int. Cl.4)

B 60 P    1/00

Der vorliegende Recherchenbericht wurde für alle Patentansprüche erstellt

| Recherchenort | Abschlußdatum der Recherche | Prüfer |
|---|---|---|
| BERLIN | 04-07-1988 | LUDWIG H J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
    Dokument

EPO FORM 1503 03.82 (P0403)